# EUROPEAN PATENT APPLICATION

(11) **EP 4 589 405 A1**
(43) Date of publication of application: **23.07.2025**
(21) Application number: 25152539.0
(22) Date of filing: 17.01.2025
(51) Int. Cl.: G06F 1/16, A63B 24/00

(54) **DISPLAY WITH ROTATABLE CAMERA SYSTEMS AND METHODS**

(30) Priority: 19.01.2024 US 202463622972 P; 15.01.2025 US 202519023133
(71) Applicant: Peloton Interactive, Inc., New York, NY 10001 (US)
(72) Inventor: Tan, Hung-Bing, Seattle (US); Chu, Chi-Chuan, Taipei (TW); Okamoto, Jason, Santa Clara (US); Chang, Jo-Chien, Taipei (TW); Liao, Julia, New York (US)
(74) Representative: Murgitroyd & Company

(57) **Abstract**

A display device with a rotatable camera is provided. In one example, the display device may include a housing. The display device may include a screen configured to display information to a user. The display device may include a camera mounted in the housing and configured to rotate relative to the housing, in response to a manipulation by the user, between an exposed orientation wherein the camera is configured to capture images of the user, and a concealed orientation wherein the camera is obscured from capturing images of the user. Additional devices, systems, and methods are also provided.

## Description

### TECHNICAL FIELD

One or more embodiments relate generally to exercise equipment and, more particularly, to a display with rotatable camera systems and methods.

### BACKGROUND

Exercise devices, such as exercise bikes, treadmills, ellipticals, rowers, and the like, often include a display configured to render information to a user during exercise. For example, the display may render workout information, video streams, on-demand workouts, performance metrics, etc. The display may tilt to orient the display as desired by a user. Some tilt mechanisms make it difficult to reposition the display and/or are prone to easily move out of position during exercise. Furthermore, the display may provide a camera, allowing the user to interact with the exercise device or a third party. However, users often find cameras to be at times a privacy concern and invasive. Therefore, there is a need in the art for systems and methods that address the deficiencies noted above, other deficiencies known in the industry, or at least offers an alternative to current techniques.

### SUMMARY

Systems and methods are provided for a display device. According to one or more embodiments of the present disclosure, a display device is provided. The display device may include a housing. The display device may include a screen configured to display information to a user. The display device may include a camera mounted in the housing and configured to rotate relative to the housing, in response to a manipulation by the user, between an exposed orientation wherein the camera is configured to capture images of the user, and a concealed orientation wherein the camera is obscured from capturing images of the user.

According to one or more embodiments of the present disclosure, a method is provided. The method includes rotating, by a user, a camera of a display device in a first direction relative to a housing of the display device to position the camera in an exposed orientation to capture images of the user. The method includes viewing, by the user, information on a screen of the display device while the camera captures the images. The method includes rotating, by the user, the camera in a second direction relative to the housing to position the camera in a concealed orientation to obscure the camera from capturing images of the user.

Additional features are set forth in part in the description that follows and will become apparent to those skilled in the art upon examination of the specification and drawings or may be learned by the practice of the disclosed subject matter. A further understanding of the nature and advantages of the present disclosure may be realized by reference to the remaining portions of the specification and the drawings, which forms a part of this disclosure.

One of skill in the art will understand that each of the various aspects and features of the disclosure may advantageously be used separately in some instances, or in combination with other aspects and features of the disclosure in other instances. Accordingly, individual aspects can be claimed separately or in combination with other aspects and features. Thus, the present disclosure is merely exemplary in nature and is in no way intended to limit the claimed invention or its applications or uses. It is to be understood that structural and/or logical changes may be made without departing from the spirit and scope of the present disclosure.

The present disclosure is set forth in various levels of detail and no limitation as to the scope of the claimed subject matter is intended by either the inclusion or non-inclusion of elements, components, or the like in this summary. In certain instances, details that are not necessary for an understanding of the disclosure or that render other details difficult to perceive may have been omitted. Moreover, for the purposes of clarity, detailed descriptions of certain features will not be discussed when they would be apparent to those with skill in the art so as not to obscure the description of the present disclosure. The claimed subject matter is not necessarily limited to the arrangements illustrated herein, with the scope of the present disclosure is defined only by the appended claims.

### BRIEF DESCRIPTION OF THE DRAWINGS

The description will be more fully understood with reference to the following figures in which components may not be drawn to scale, which are presented as various embodiments of the mounting system for a display described herein and should not be construed as a complete depiction of the scope of the display mounting system.
FIGS. 1-8 illustrate several various views of a display device in accordance with embodiments of the disclosure.
FIGS. 9-11 illustrate rear views of a display device with a portion of back shell removed for illustration purposes in accordance with embodiments of the disclosure.
FIGS. 12-14 illustrate several various views of a display device in accordance with embodiments of the disclosure.
FIGS. 15A-15E illustrate several various views of the display device mounted to exercise equipment in accordance with embodiments of the disclosure.
FIG. 16 illustrates a front view of a camera of a display device in a forward-facing exposed orientation in accordance with an embodiment of the disclosure.
FIG. 17 illustrates a front view of a camera of a display device in a downward-facing exposed orientation in accordance with an embodiment of the disclosure.
FIG. 18 illustrates a front view of a camera of a display device in a concealed orientation in accordance with an embodiment of the disclosure.
FIG. 19A illustrates a front view of a display with a speaker grill removed for illustration purposes in accordance with an embodiment of the disclosure.
FIG. 19B illustrates a close-up front view of a camera in FIG. 19A in accordance with an embodiment of the disclosure.
FIG. 20 illustrates an exploded view of a display device in accordance with an embodiment of the disclosure.
FIG. 21 illustrates a perspective view of an enclosure in accordance with an embodiment of the disclosure.
FIGS. 22A-22B illustrate various views of a torque hinge of the display device in accordance with embodiments of the disclosure.
FIGS. 23A-23D illustrate several various views of a bracket of the display device in accordance with embodiments of the disclosure.
FIGS. 24A-24E illustrate several various views of a pin of the display device in accordance with embodiments of the disclosure.
FIG. 25 illustrates a cross-sectional view of a bracket and pin of the display device in FIG. 19A, as seen along the lines of the section 19A-19A taken therein, in accordance with an embodiment of the disclosure.
FIGS. 26A-26B illustrate various views of a catch and a knob of the display device in accordance with embodiments of the disclosure.
FIGS. 27-29 illustrate several various views of an elongated body of a camera in accordance with embodiments of the disclosure.
FIGS. 30-31 illustrate various views of a camera in accordance with embodiments of the disclosure.
FIG. 32 illustrates a block diagram of a display device in accordance with an embodiment of the disclosure.
FIG. 33 illustrates a flow chart of a process of operation of a display device in accordance with an embodiment of the disclosure.

Embodiments of the disclosure and their advantages are best understood by referring to the detailed description that follows. It should be appreciated that like reference numerals may be used to identify like elements illustrated in one or more of the figures.

### DETAILED DESCRIPTION

According to the present disclosure, a display with rotatable camera systems and methods are provided. The display with rotatable camera system (also referred to herein as a "display device" or "display") may include a rotatable camera configured to be moved between an exposed orientation and a concealed orientation. The camera being able to move between different orientations may allow for privacy of a user. For instance, when the camera of the display is in a concealed orientation, the camera may be powered off and obscured from capturing images of the user. Furthermore, versatility in the operation of the display may be facilitated by the user being able to move the camera between different angles when in the exposed orientation. For instance, the camera may be configured to rotate through a plurality of angles associated with the exposed orientation, such as a first angle associated with an upward-facing direction of the camera, a second angle associated with a forward-facing direction of the camera, and a third angle associated with a downward-facing direction of the camera.

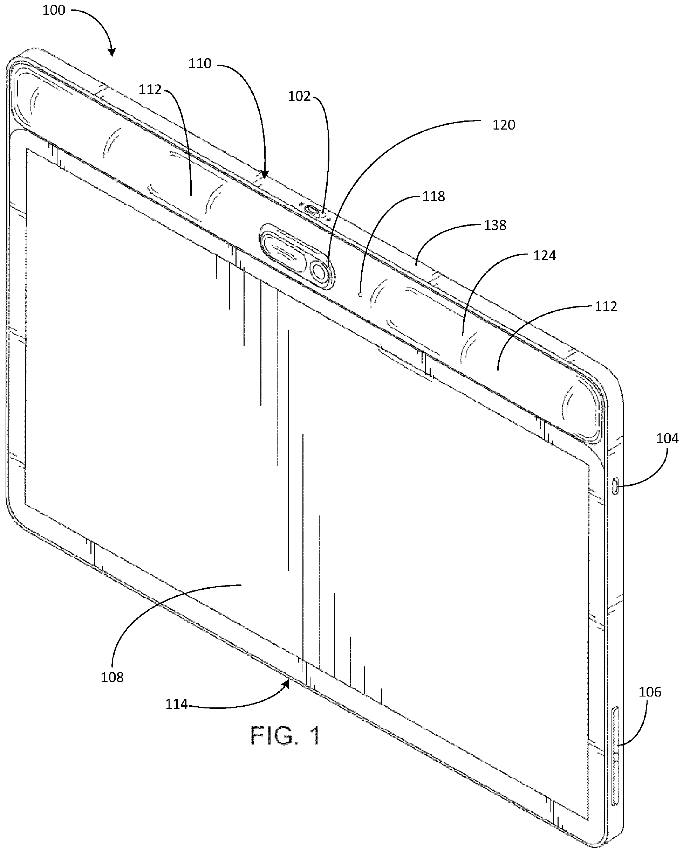

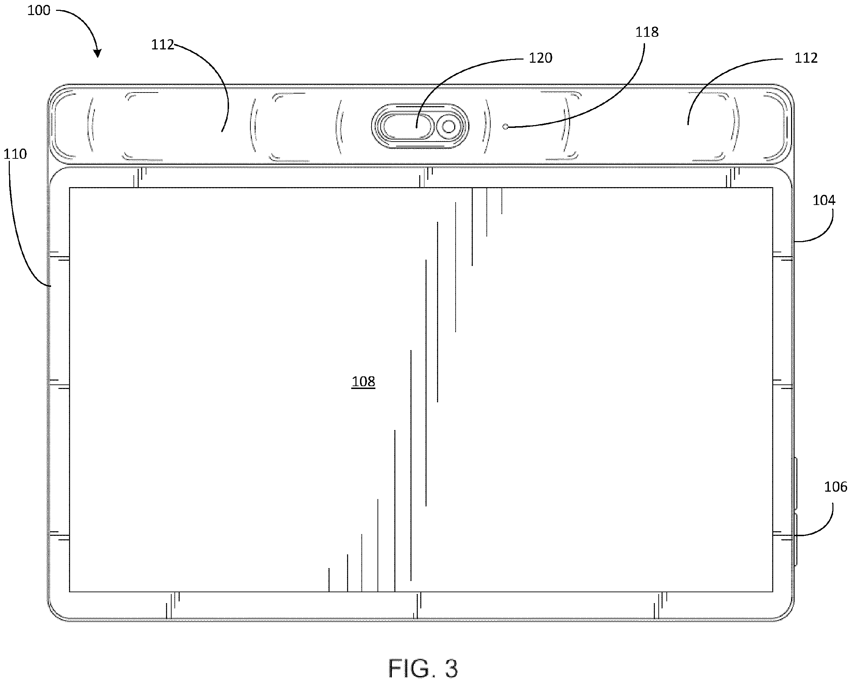

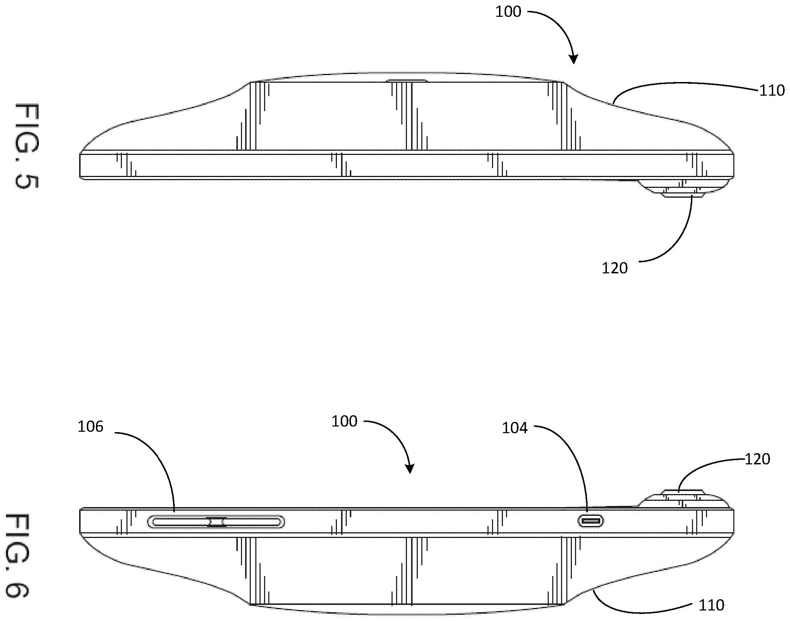

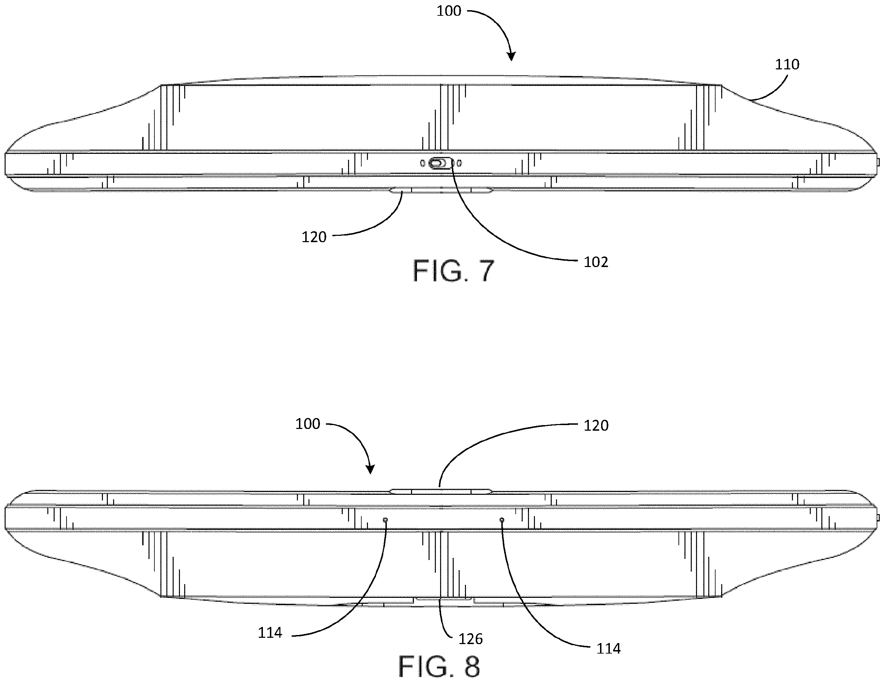

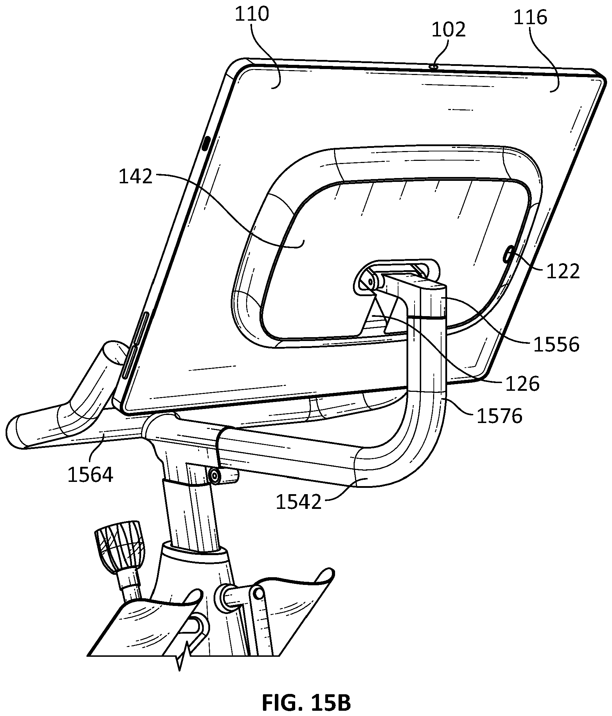

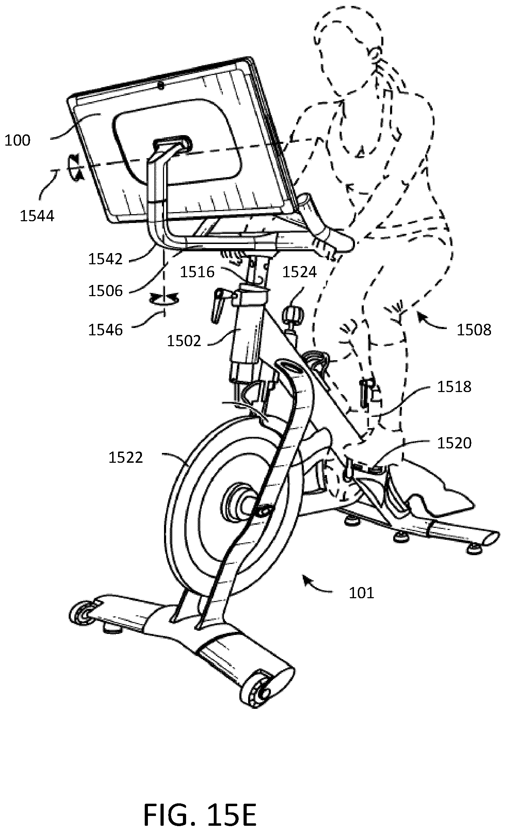

Referring now to the drawings, where the showings are for purposes of illustrating embodiments of the present disclosure and not for purposes of limiting the same, FIGS. 1-8 illustrate several various views of a display device 100 in accordance with an embodiment of the disclosure. In some embodiments, display device 100 may be configured to render information (e.g., commands, workout progress, entertainment, and so on) to a user. For example, display device 100 may render one or more video streams, a range of performance metrics, images, or other visual representations. In some embodiments, display device 100 may include or function as a user interface, such as display device 100 having a range of controls. In some embodiments, display device 100 may be used to access membership information, login or logout of an exercise management system, present live and/or archived exercise classes, and other content. In some embodiments, displays device 100 may be configured to mount to and/or be communicatively connected to (e.g., wired or wirelessly interact with) exercise equipment, such as exercise equipment 101 (shown in FIG. 15E). In some embodiments, display device 100, or at least the information rendered on a screen 108 (e.g., an LCD screen, an LED screen, or the like) of display device 100, may be similar to the display or method disclosed in U.S. Patent Application No. 16/412,327, filed on May 14, 2019 and entitled "EXERCISE SYSTEM AND METHOD," the disclosure of which is hereby incorporated herein by reference in its entirety. Display device 100 may include a simple display device (e.g., an LCD screen, an LED screen, etc.), a portion of a computing device (e.g., a tablet, a laptop, etc.), or a portion of a distributed display system, among other examples.

In one or more embodiments, display device 100 may include a housing 110. In various embodiments, housing 110 may include a front shell 138 and a back shell 116 connected together. In some embodiments, housing 110 may include a monolithic housing, where front shell 138 and back shell 116 are a single unit. In other embodiments, housing 110 may include separate components, where front shell 138 and back shell 116 are individual components that are attached (e.g., fitted, adhered, or attached together). Housing 110 may be composed of plastic, polymer, fiberglass, metal, glass, any combination thereof, and the like.

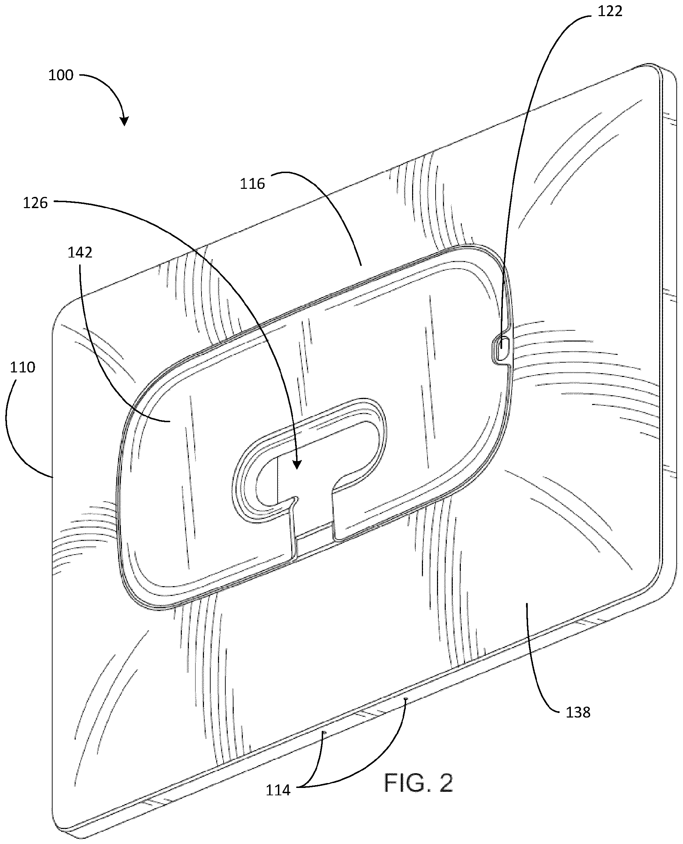

In various embodiments, display device 100 may include a front speaker panel 124 (also referred to herein as a "speaker grill") and a camera 120, which each may be positioned adjacent to and/or integrated into front shell 138. For instance, in one or more embodiments, camera 120 may be connected to front shell 138 and rotatably disposed within front speaker panel 124. As shown, front speaker panel 124 may extend along an upper portion of display device 100 to limit sweat or other liquid buildup within the front speaker panel 124. However, as understood by one of ordinary skill in the art, front speaker panel 124 may be located anywhere within housing 110. In one or more embodiments, display device 100 may include a rear speaker panel 142 (shown in FIG. 2), which may be positioned adjacent to and/or integrated into back shell 116 of housing 110. In one or more embodiments, speakers 112 may each at least be partially encased by front speaker panel 124 or rear speaker panel 142. In one or more embodiments, display 100 may include an indicator 118, which indicates a mode of operation and/or status of camera 120. Indicator 118 may be located on housing 110, such as, for example, on speaker panel 124 of display 100. In various embodiments, indicator 118 may be configured to turn on when camera 120 is powered on and turn off when camera 120 is powered off, as discussed in greater detail below herein. In some embodiments, indicator 118 may include a light indicator, such as one or more light emitting diodes (LEDs). Indicator 118 may be configured to notify the user of a mode of operation and/or status of camera 120 by blinking, fading, turning on and off, changing colors, and so on.

In one or more embodiments, display device 100 may include an audio unit, which may include one or more components configured to produce and/or receive (pick up) sound. For example, audio unit may include one or more speakers 112 (also referred to herein as "speaker drivers") and one or more microphones 114. For example, in a non-limiting embodiment, audio unit may include one or more low frequency drivers (e.g., a pair of low frequency drivers) and one or more high frequency drivers (e.g., a pair of high frequency drivers), although other configurations are contemplated. Each driver may be housed within a respective enclosure (e.g., speaker panel 124 or 142) and secured to back shell 116 and/or front shell 138. Such enclosures may be designed to provide a desired frequency response. As shown, the one or more low frequency drivers may be directed out a back side of display 100. The one or more high frequency drivers may be directed out a front side of display 100. As a result, the one or more high frequency drivers may face the user of exercise equipment to take advantage of the directional nature of high frequency sound. The one or more low frequency drivers may face away from the user for space efficiency, such as to avoid having a large speaker bar facing the user.

In one or more embodiments, one or more microphones 114 may be disposed on housing 110 (e.g., front shell 138). For example, one or more microphones 114 may be installed into a bottom portion of front shell 138, as shown in FIG. 2. In some embodiments, microphones 114 may include a printed circuit board assembly (PCBA) and a microphone port (e.g., accessory port 122 shown in FIG. 2). In some embodiments, microphone 114 may include a piece of tape connected to microphone port to facilitate assembly of microphone 114 to front shell 138. For instance, a PCBA of microphone 114 may be directly sealed to front shell 138.

As shown in FIG. 2, which includes a bottom rear perspective view of display device 100 in accordance with an embodiment of the disclosure, a plurality of microphones 114 may be located at a bottom of display device 100 (e.g., below or beneath screen 108), though other configurations are contemplated. For example, display device 100 may include two microphones, with a first microphone and a second microphone positioned along a bottom edge of display device 100. In some embodiments, display device 100 may include a third microphone positioned along an adjacent side edge of display device 100. In some embodiments, display device 100 may include a fourth microphone positioned on back shell 116 of display device 100. In one or more embodiments, microphone 114 may be used for a voice control feature of the user interface of display device 100. For instance, the illustrated microphone layout and positioning may facilitate voice capture and recognition during workout sessions. In other embodiments, microphone 114 may be used for bidirectional communication between the user and a third party. The illustrated microphone layout and positioning may reduce interference and other undesirable sound characteristics.

In one or more embodiments, display device 100 may include a volume control 106, as shown in FIG. 1. In some embodiments, volume control 106 may include a plurality of buttons configured to adjust a volume level of display 100 upon actuation (e.g., an up button for increasing volume and a down button for decreasing volume). In some embodiments, the plurality of buttons may be centered on a parting line between front shell 138 and back shell 116.

Display device 100 may include a power button assembly 104 (as shown in FIG. 1), and one or more input output (IO) ports (e.g., accessory port 122). Power button assembly 104 may include a button configured to be actuated (e.g., depressed, slid, and so on) in order to power display device on or off. In some embodiments, power button assembly 104 may be located on a back side of housing 110, such as on back shell 116.

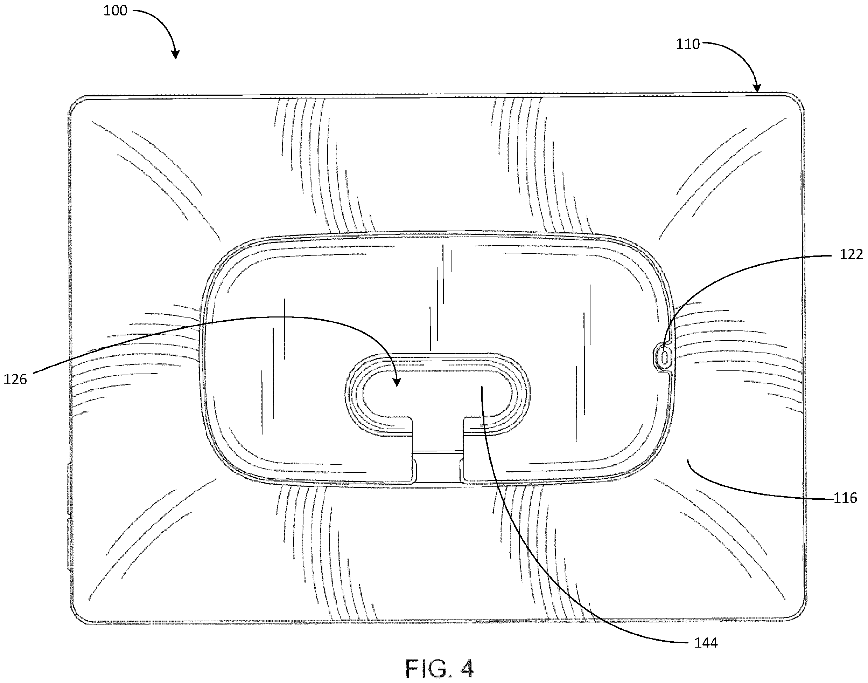

In one or more embodiments, display device 100 may include accessory port 122 (shown in FIG. 4), as previously mentioned herein. Accessory port 122 may be configured to connect to one or more devices and/or accessories to exercise equipment 101 and/or display device 100. For instance, accessory port 122 may be used to charge a device, such as a user device (e.g., tablet, smartphone, and the like). In various embodiments, accessory port 122 may be implemented as a USB-C port that supports some functionalities that a USB-C connector may support. In various embodiments, accessory port 122 may be connected to headphones or additional monitors using one or more adapters or by directly plugging in such devices to accessory port 122. In one or more embodiments, accessory port 122 may be configured to connect to a wired network (e.g., ethernet).

In one or more embodiments, display device 100 may include a screen 108 configured to display information to a user. For example, screen 108 may be configured to render workout sessions and corresponding information, video streams, on-demand workouts, performance metrics, and so on. For instance, screen 108 may be configured to render various visual representations and/or graphics. For example, screen 108 may show information such as, but not limited to, current revolutions per minute, current resistance values, type of workout session currently being displayed, a weather report, a timer, a clock, an incline, user statistics (e.g., heart rate, stress levels, calories burned, VO₂ level, and so on), a progress indicator (e.g., an indicator showing a measurement of completion of a workout session or series of workout sessions), and the like. In some embodiments, screen 108 may show an image (e.g., picture or video stream) of the user in real-time. For example, a split screen of a workout (e.g., instructor performing the workout) and the user may be displayed on screen 108. The image of the user may be altered to include the visual representations. In some embodiments, the image may be altered to include highlighted text or areas of the image, overlayed information of the image, and the like.

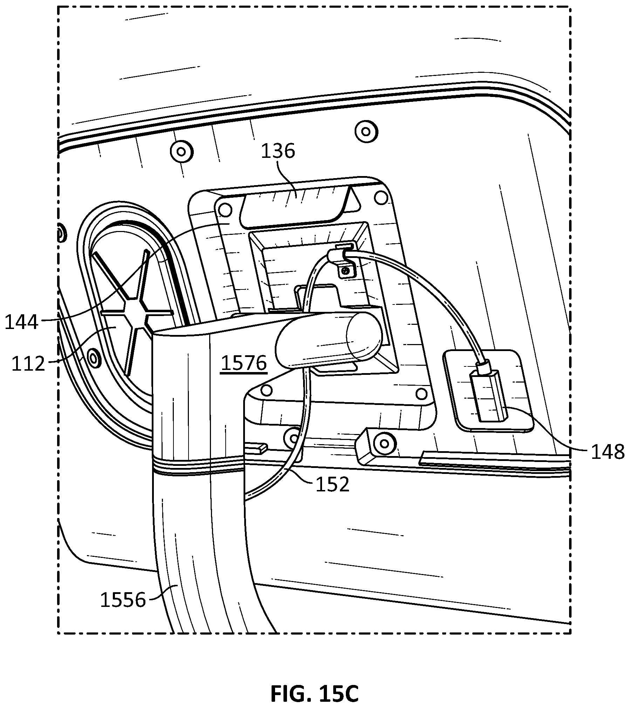

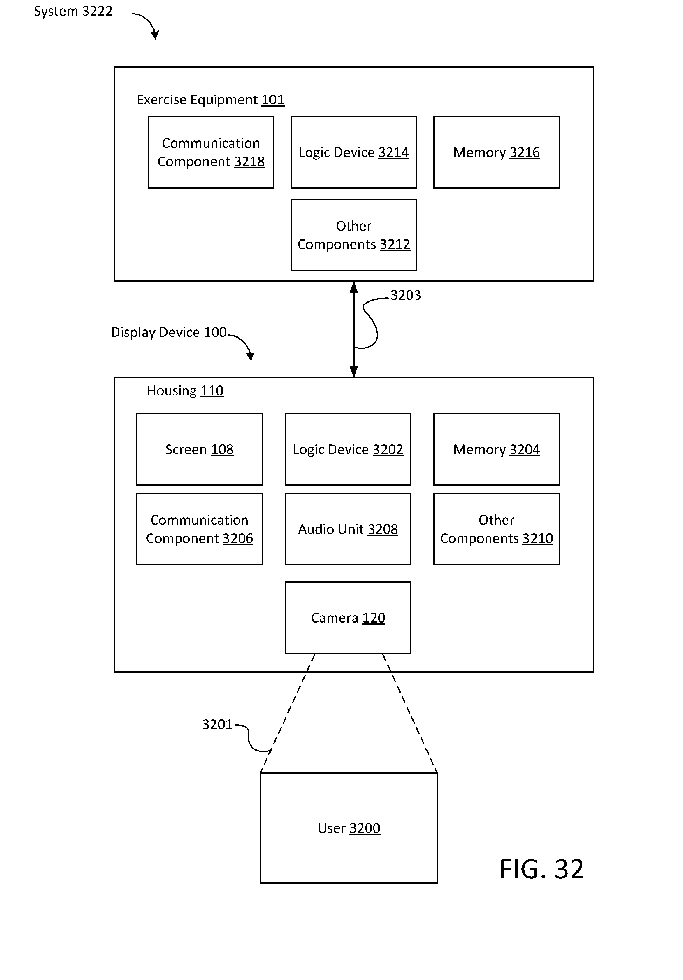

In one or more embodiments, a cable 152 attached to exercise equipment 101 may traverse through an aperture 126 of back shell 116 (e.g., rear speaker panel 142), and connect at a power port 148 covered by rear speaker panel 142 (shown in FIG. 15C). Power port 148 may receive power from exercise equipment 101, which may be powered using, for example, a wall outlet (e.g., a power adapter of exercise equipment connected to a power outlet) or a remote power source of exercise equipment 101. In various embodiments, data and/or information may be exchange between exercise equipment 101 and display device 100 using power port 148. For instance, power port 148 may provide data to and from exercise equipment 101 during operation of the exercise system (e.g., exercise equipment 101 and display device 100 mounted to the exercise equipment). Data exchanged (e.g., transmitted) between display 100 and exercise equipment 101 may include, but is not limited to, sensor data, image data (e.g., images and corresponding information from camera 120), user data, and so on. Sensor data may include information or data captured by one or more sensors of display 100 and/or exercise equipment 101. For instance, sensor data may include detected data, such as a heartrate of the user, VO₂ level of the user, stress level of the user, detected resistance level of the exercise equipment, revolutions per minute of the exercise equipment, and so on. Image data may include data or information related to one or more images captured by camera 120. User data may include data or information associated with the user. User data may include, but is not limited to, a weight of the user, height of the user, current and/or past hear rate of the user, age of the user, stress levels of the user, and so on. User data may be manually inputted by the user, retrieved from a database, server, or remote user device (e.g., smartphone), or detected using the one or more sensors of display 100 and/or exercise equipment 101. In a non-limiting embodiment, a sensor (e.g., a sensor board) on exercise equipment 101 may detect user data (e.g., performance data), such as, for example, speed data (e.g., revolutions per a unit of time). Sensor board may then transmit the performance data to display device 100 (e.g., a logic device of display 100) through power port 148, so the performance data may be processed by the logic device (e.g., logic device 3202 shown in FIG. 32) of display device 100 and/or so the performance data may be shown to the user on screen 108. In another non-limiting embodiment, performance data may include a resistance level so that the resistance level of exercise equipment 101 may be tracked by exercise equipment 101 (e.g., exercise bike, rower, stairs, and so on). For instance, a resistance of an exercise bike may need to be changed or updated based on instructions from a workout session (e.g., a live session or a pre-recorded workout session or program) displayed on display device 100. Logic device of display 100 may send the updated resistance to a logic device and/or sensor board of the exercise bike, which then changes the resistance of the exercise bike in real time automatically (e.g., without user actuation or input). In one or more embodiments, display device 100 may be communicatively connected (e.g., wirelessly connected) to a server. Display device 100 may retrieve workout sessions and/or receive software updates from the server.

Display device 100, using bidirectional communication facilitated by power port 148 or a wireless communication, may receive information from the logic device of exercise equipment 101. Information from exercise equipment 101 may include data associated with a type of exercise equipment 101. Display device 100 may receive an over-the-air update and software sync when connected to exercise equipment 101. Such a feature allows display device 100 to be versatile and used with a variety of types of exercise equipment 101. For instance, display device 100 may determine what type (e.g., bike, rower, stairs, treadmill, and so on) of exercise equipment display device 100 has been connected to and may roam software of the communicatively connected server to retrieve programs associated with the type of exercise equipment.

As previously mentioned, display device 100 may include camera 120, which is mounted in housing 110. Camera 120 may include an elongated body 208 (also referred to herein as a "body"). Elongated body 208 may be at least partially disposed within housing 110 of display device 100. For instance, camera 120 may be at least partially disposed in an upper portion of housing 110, such as, for example, within a speaker grill 124 of display device 100. In some embodiments, elongated body 208 may protrude relative to an adjacent and/or surrounding surface of housing 110. In other embodiments, elongated body 208 may be recessed relative to the adjacent and/or surrounding surface of housing 110. In other embodiments, elongated body 208 may be flush relative to the adjacent and/or surrounding surface of housing 110. As understood by one of ordinary skill in the art, though the elongated body is shown as a pill shape, the body may be any shape or size that allows camera to be rotated about an axis within the housing.

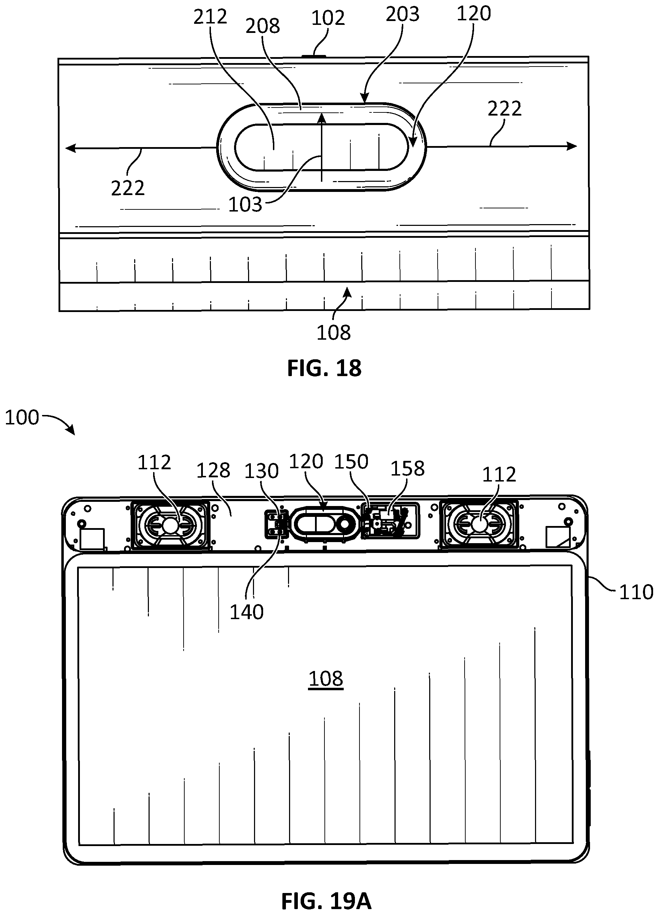

In one or more embodiments, camera 120 may be configured to rotate relative to housing 110, in response to a manipulation by the user, between an exposed orientation (as shown in FIGS. 1-8) and a concealed orientation (as shown in FIG. 18). In various embodiments, the user may manipulate camera 120 using various geometries of elongated body 208. For instance, elongated body 208 may include various textures, surface treatments, and/or shapes to facilitate manipulation of camera 120 by the user. For example, the user may manipulate camera 120 using a scallop, such as indentation 202, that acts as a thumb rest. In some embodiments, indentation 202 may include a recessed surface, e.g., a depression, within a front portion 204 of the elongated body 208 of camera 120 that the user may bias to rotate camera 120 in a desired direction. As understood by one of ordinary skill in the art, though indentation 202 is illustrated as a stadium shape (e.g., a discorectangle), the indentation may be any shape of size appropriate for allowing a user to manipulate the orientation of the camera.

In the exposed orientation, camera 120 may be configured to capture images of the user. In the concealed orientation, camera 120 is obscured from capturing images of the user, as discussed in further detail herein below. Concealed orientation may provide a privacy option and/or a power actuation of camera 120 (e.g., camera 120 may be powered off when in the concealed orientation). For instance, concealed orientation may provide a privacy feature that allows for camera 120 to be selectively covered as desired by a user. For example, in the concealed orientation, a field of view of camera 120 is blocked for privacy. Camera 120 may be positioned in various locations on housing 110, such as at a top portion of housing, a bottom portion of housing, a right portion of housing, a left portion of housing, and so on. For example, as shown in FIGS. 1-8, camera 120 may be positioned at a top, central location of display device 100 between speakers 112.

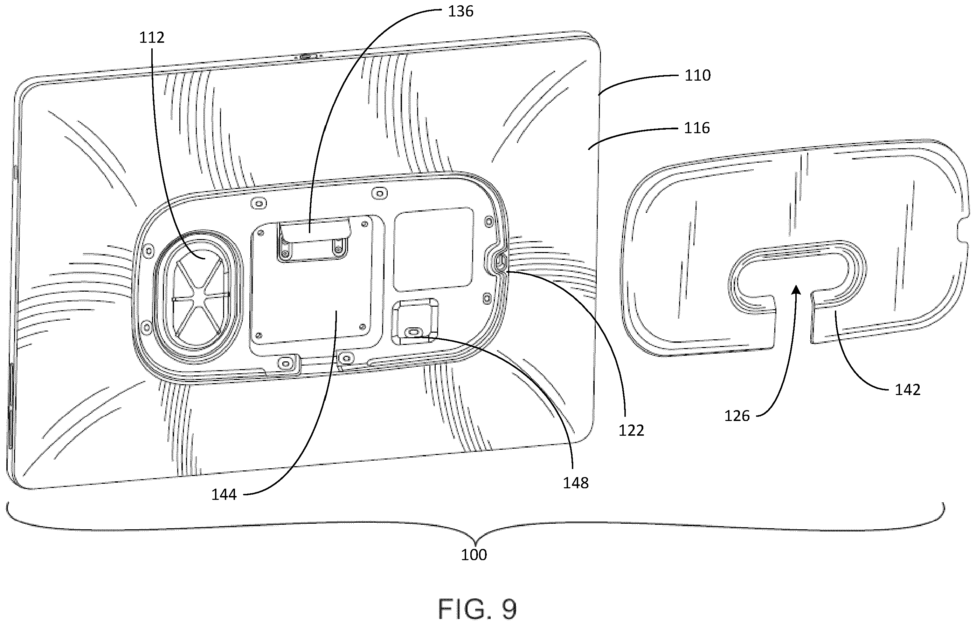

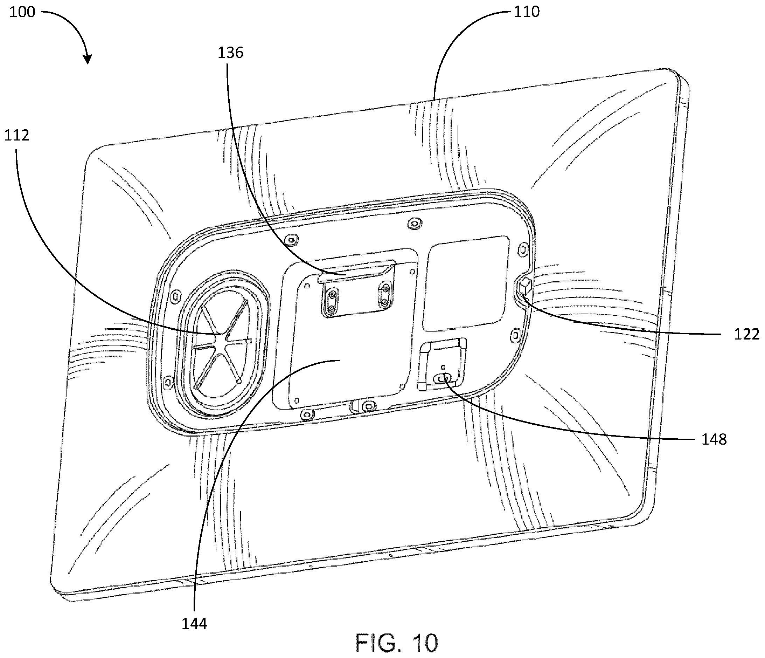

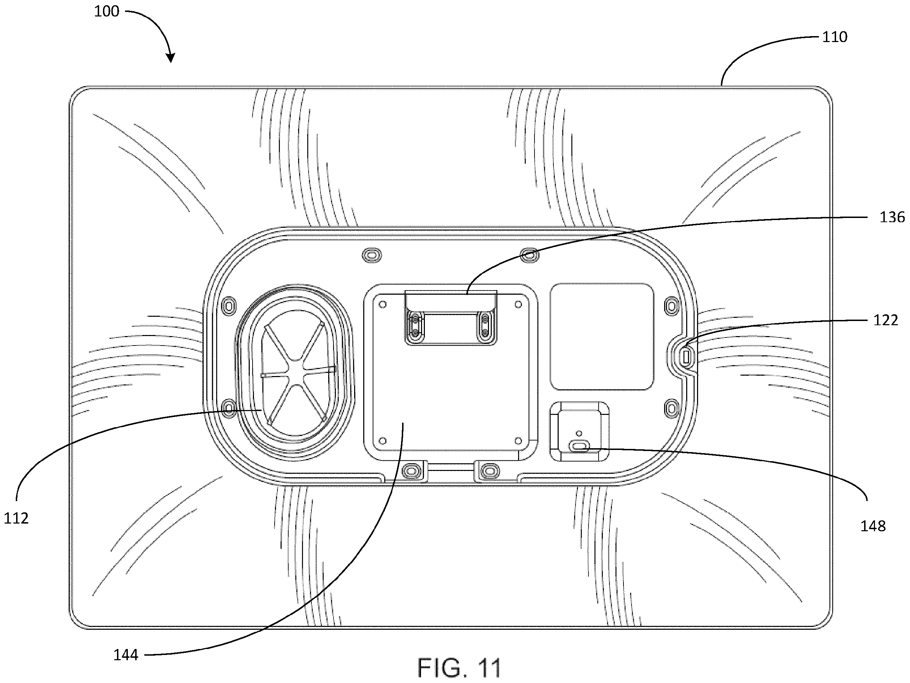

FIGS. 9-11 illustrate rear views of a display device with a portion of back shell 116 removed for illustration purposes in accordance with an embodiment of the disclosure. FIG. 9 illustrates a rear view of display device 100 with rear speaker panel 142 removed for illustration purposes in accordance with an embodiment of the disclosure. As shown in FIG. 9, display device 100 may include a mounting component 144 secured to front shell 138. Mounting component 144 may support one or more components of display device 100. Mounting component 144 may provide the structural support needed for each of the components connected thereto. For example, mounting component 144 may have sufficient rigidity and/or strength to provide a sure foundation for the mounting system, screen 108, PCBAs, audio unit, and the volume control, among others.

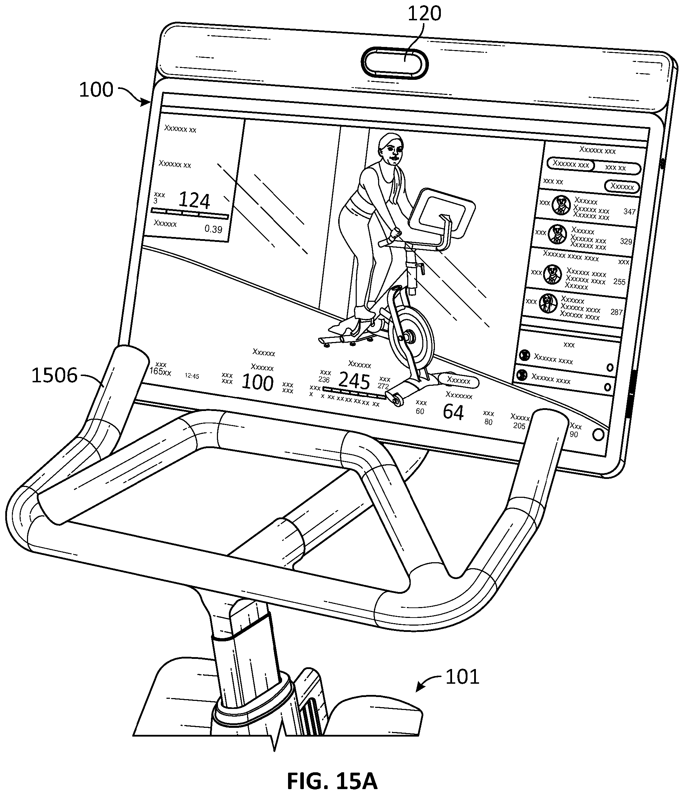

Mounting component 144 may be configured to secure display device 100 to a mount 1576 (shown in FIG. 15C) of exercise equipment 101 (e.g., an exercise bike, a treadmill, a rower, and/or other types of exercise equipment), as discussed further in FIGS. 15A-15E. Mounting component 144 may be configured to rotate display device 100 relative to the mount 1576, such as tilting display device 100 up and down relative to mount 1576. As shown in FIG. 4, at least a portion of mount 1576 may extend through housing 110. For instance, back shell 116 may include rear speaker panel 142, which may include aperture 126 disposed therein that the mount 1576 may traverse through to secure display 100 to exercise equipment 101. One or more portions of mount 1576 may extend or pass through aperture 126 of housing 110 (e.g., rear speaker panel 142) to connect mounting component 144 of display device 100 to a mount, as detailed more fully below. In some embodiments, mounting component 144 may include a mounting component (e.g., a plate having one or more holes or apertures) having standard dimensions. For instance, mounting component 144 may be compatible with a VESA^{®} mount (e.g., a 100x100mm mount). In some embodiments, display device 100 may include a clip 136 (shown in FIG. 9). Clip 136 may facilitate the assembly process, where mounting component 144 may be connected to housing 110 using clip 136, where clip 136 holds mounting component 144 (e.g., plate) in place.

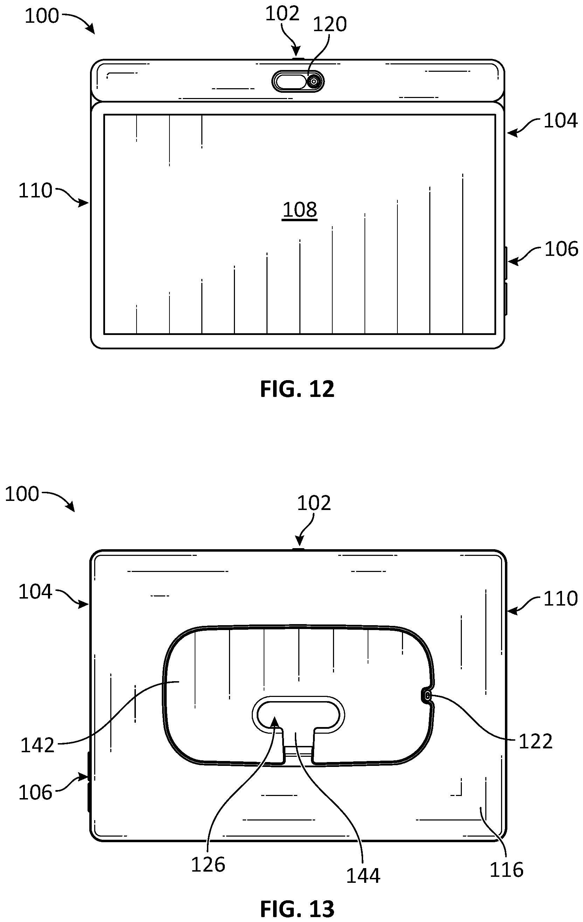

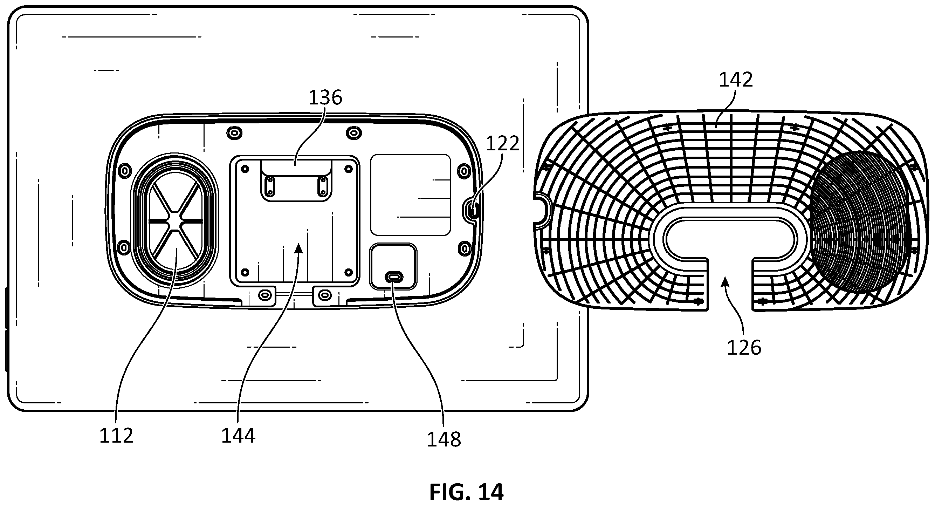

FIGS. 12-14 illustrate several various views of display device 100 in accordance with embodiments of the disclosure.

Now referring to FIGS. 15A-15E, several various views of display device 100 mounted to exercise equipment 101 is shown in accordance with embodiments of the disclosure. Exercise equipment 101 may be any type of exercise device and/or apparatus designed for cardiovascular and/or strength training of a user, such as an exercise bike, treadmill, elliptical machine, or rowing machine (e.g., rower), among others. Referring to FIGS. 15A-15E, exercise equipment 101 is embodied as an exercise bike for illustration purposes only. However, it is contemplated that the concepts described below may be applied to other exercise apparatuses, where suitable, such as a treadmill, a rowing machine, or an elliptical, among others. For example, the concepts described herein may be applied to any device where a user views a display while exercising, as described below.

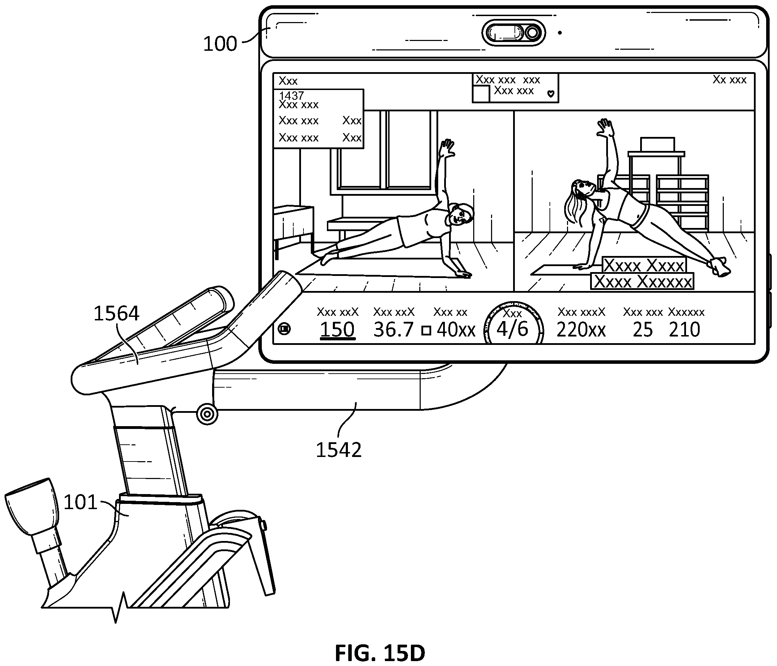

As shown in FIGS. 15A-15C, to allow viewing of display device 100 by the user, display device 100 may be mounted in front of the user forward of a handlebar 1506 (i.e., such that handlebar 1506 is positioned at least partially between display device 100 and the seat 1508). Display device 100 may be mounted to the exercise equipment 101 in many configurations. For instance, exercise equipment 101 may include a support arm 1542 extending from handlebar 1506. Depending on the application, support arm 1542 may be cantilevered from handlebar 1506, attached to handlebar 1506, or the like. Display device 100 may be connected to support arm 1542 to place display device 100 within a viewing area of the user during exercise. Display device 100 may be mounted to support arm 1542 via one or more devices or mechanisms (e.g., mounting component 144 and/or aperture 126) configured to adjust the position or orientation of display device 100. For example, display device 100 may be mounted to support arm 1542 in a manner allowing display device 100 to tilt relative to handlebar 1506 or support arm 1542, such as to orient display device 100 towards the user during exercise. In some embodiments, display device 100 may be attached to exercise equipment 101 by mount 1576 that permits display device 100 to rotate (e.g., pivot) left and right relative to exercise equipment 101, and as shown in FIG. 15D. In some embodiments the display may be attached to the exercise equipment by a mount (e.g., mount 1576) that permits the display to rotate (e.g., pivot) left and right and/or up and down relative to the exercise device in accordance with any of the features set forth in U.S. Patent No. 11,786,797, issued October 17, 2023 and entitled "EXERCISE DEVICE ROTATING DISPLAY MECHANISM SYSTEMS AND METHODS", and U.S. Patent No. 11,852,279, issued December 26, 2023 and entitled "DISPLAY MOUNTING SYSTEMS AND METHODS," both of which are incorporated by reference herein. In various embodiments, swiveling of display device 100 and/or adjusting an angle of camera 120 may allow users of various heights to perform various activities using display device 100. For example, display device 100 may be swiveled around (e.g., pivoted) and camera 120 may be directed downward to capture images of the user performing yoga or free weight exercises on the floor.

In one or more embodiments, exercise equipment 101 may include support arm 1542, which may extend from main bar 1564 of handlebar 1506. In some embodiments, support arm 1542 may extend generally orthogonal from main bar 1564 and from the centerline of main bar 1564. As shown, handlebar 1506 is mirrored across support arm 1542, although other configurations are contemplated. Support arm 1542 may have a length extending between handlebar 1506 and a terminal end 1570. Terminal end 1570 may be curved, such as upwardly towards vertical. In some embodiments, support arm 1542 is hollow to allow one or more cables (e.g., a data cable, a voice cable, etc.), such as cable 152, to extend through support arm 1542.

As shown in FIG. 15E, neck 1556 may connect display device 100 to handlebar 100. For instance, neck 1556 may include a mount 1576 that attaches to display device 100. Mount 1576 may be a cantilevered arm to space display device 100 away from neck 1556, such as to accommodate tilting of display device 100 up and down about the first axis 1544. As a result, display device 100 may be tilted to one of a plurality of positions relative to the neck 1556 to position display device 100 as desired by a user, as explained below. In some embodiments, neck 1556 may be rotatably coupled to support arm 1542 such that at least a portion of the neck 1556 is rotatable relative to handlebar 1506 to rotate display device 100 about the second axis 1546. For example, neck 1556 may include a rotating mechanism similar to the rotating device disclosed in U.S. Patent Application No. 16/933,961, filed on July 20, 2020 and entitled "EXERCISE DEVICE ROTATING DISPLAY MECHANISM SYSTEMS AND METHODS," which is hereby incorporated herein by reference in its entirety.

Exercise equipment 101 may include a frame 1502 and one or more components connected to frame 1502. For example, exercise equipment 101 may include a handlebar 1506, a seat 1508, and a drive mechanism for operating against a resistance structure, or any combination thereof. Handlebar 1506 may be supported by a handlebar post 1516, and seat 1508 may be supported by a seat post 1518. In some embodiments, exercise equipment 101 may include various features that allow adjustment of the position of seat 1508, the position of handlebar 1506, and so on. For instance, the height of handlebar 1506 may be adjusted to fit the exercise bike to a user, such as by sliding the handlebar post 1516 within frame 1502 towards or away from frame 1502.

The drive mechanism may include many configurations. For example, the drive mechanism may include a pair of pedals 1520 connected to a crank configured to drive a flywheel 1522 through a belt, chain, gearing, or other mechanism. Depending on the application, flywheel 1522 may be a heavy metal disc, an air resistance mechanism, or other suitable device designed for cardiovascular and/or strength training of a user. In some embodiments, the force required to spin flywheel 1522 may be adjusted, such as via a resistance adjustment knob 1524 that directly or indirectly increases or decreases a resistance of the flywheel 1522 to rotation. In other embodiments, resistance may be adjusted by logic device of display device 100, as previously described herein. For instance, display device 100 may be providing an instructional video that requires the user to vary the resistance of exercise equipment 101. Display device 100 may use bidirectional communication using, for example, accessory port 122 (shown in FIG. 15C) or power port 148 (shown in FIG. 9), to relay the change in resistance to exercise equipment 101, automatically adjusting the resistance (e.g., a setting of resistance adjustment knob 1524) required by the workout session without the user needing to manually adjust the resistance by, for example, rotating resistance adjustment knob 1524.

Display device 100 may rotate about one or more axes. For example, display device 100 may rotate about first axis 1544 to tilt display device 100 up and down relative to handlebar 1506. In some embodiments, display device 100 may rotate about a second axis 1546 to pan display device 100 left and right relative to handlebar 1506, as shown in FIG. 15D. First axis 1544 may be parallel to the Y-axis, perpendicular to the Z-axis, lie within the XY plane formed by the X-axis and the Y-axis, or be parallel to the XY plane, among others. In some embodiments, at least a portion of support arm 1542 may define a vertical plane, with first axis 1544 extending perpendicular or generally perpendicular the vertical plane defined by support arm 1542. The second axis 1546 may be parallel to the Z-axis, perpendicular to the Y-axis, lie within the YZ plane formed by the Y-axis and the Z-axis, or be parallel to the YZ plane, among others. In some embodiments, first axis 1544 may be a horizontal axis or a generally horizontal axis, and second axis 1546 may be a vertical axis or a generally vertical axis.

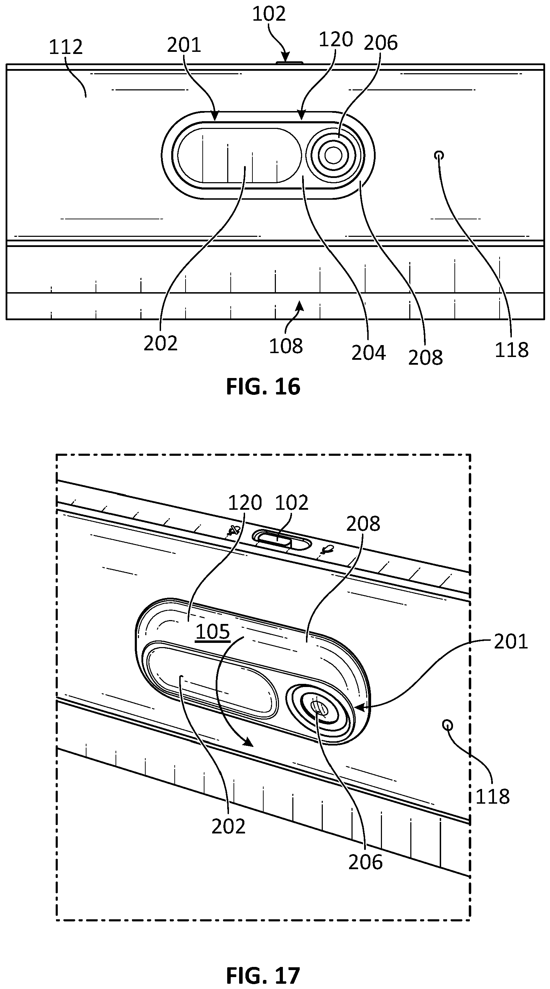

Now referring to FIGS. 16-18 the various orientations of camera 120 are shown in accordance with embodiments of the disclosure. In one or more embodiments, camera 120 includes an imaging device 206 that may be disposed at least partially within elongated body 208 and configured to capture images. Imaging device 206 may be visible to the user in exposed orientation 201 and may be obscured from the user in concealed orientation 203. Camera 120 may be tilted to one of a plurality of positions to orient camera 120 as desired, thus adjusting a field of view (FOV) of imaging device 206.

Camera 120 may be configured to rotate relative to housing 110, in response to a manipulation by the user, between exposed orientation 201, where camera 120 is configured to capture images of the user, and concealed orientation 203, where camera 120 is obscured from capturing images of the user. In one or more embodiments, camera 120 may be configured to rotate through a plurality of angles associated with exposed orientation 201. The angles may include, a first angle associated with an upward-facing direction of camera 120 (not shown), a second angle associated with a forward-facing direction of camera 120 (shown in FIG. 16), and a third angle associated with a downward-facing direction of camera 120 (shown in FIG. 17). As understood by one of ordinary skill in the art, though the plurality of angles associated with exposed orientation 201 are described as three discrete angles, the plurality of angles may include any number of discrete or continuous angles that camera may be positioned at upon rotation of camera 120.

For example, camera 120 may be tilted up to a first position at a first angle to orient camera 120 upwards in the upward-facing direction (e.g., upwardly away from the handlebar assembly of exercise equipment 101), such as to orient camera 120 towards a taller user of exercise equipment 101. Conversely, camera 120 may be tilted down to a third position at a third angle to orient camera 120 downwards in the downward-facing direction (e.g., downwardly towards the handlebar assembly of exercise equipment 101), such as to orient camera 120 towards a shorter user of exercise equipment 101 or towards a user performing floor exercises (e.g., yoga). Camera 120 may be positioned in any position between first position and third position to orient camera 120 as desired within its tilting range of motion. For example, camera 120 may be positioned in a second position at a second angle to orient camera 120 forward in the forward-facing direction (e.g., directly outward from housing 110). In various embodiments, the FOV of camera 120 may be maximized when both camera 120 and display 100 (e.g., housing 110 pivoted on the mount) are titled in an upward-facing direction or downward-facing direction.

In some embodiments, when camera 120 is oriented in the upward-facing direction, a focal axis of a lens of imaging device 206 may be angled upward and away from screen 108. In other embodiments, the focal axis of imaging device 206 may be tilted away from screen 108, thus creating an obtuse angle between a surface of screen 108 and the focal axis. In various embodiments, focal axis may create an acute angle relative to a normal axis of screen 108 when camera 120 is oriented in the upward-facing direction.

FIG. 16 illustrates a front view of camera 120 of display device 100 positioned at the second angle in a forward-facing direction associated with exposed orientation 201 in accordance with an embodiment of the disclosure. In some embodiments, when camera 120 is oriented at the forward-facing angle, the focal axis of imaging device 206 may be substantially orthogonal to a planar surface of screen 108. In other embodiments, when camera 120 is oriented at the forward-facing angle, a front portion 204 of elongated body 208 may be substantially centered within a slot of speaker grill 124 and substantially orthogonal to a surface of speaker grill 124. In various embodiments, focal axis may be parallel to the normal axis of screen 108 when camera 120 is oriented in the forward-facing direction.

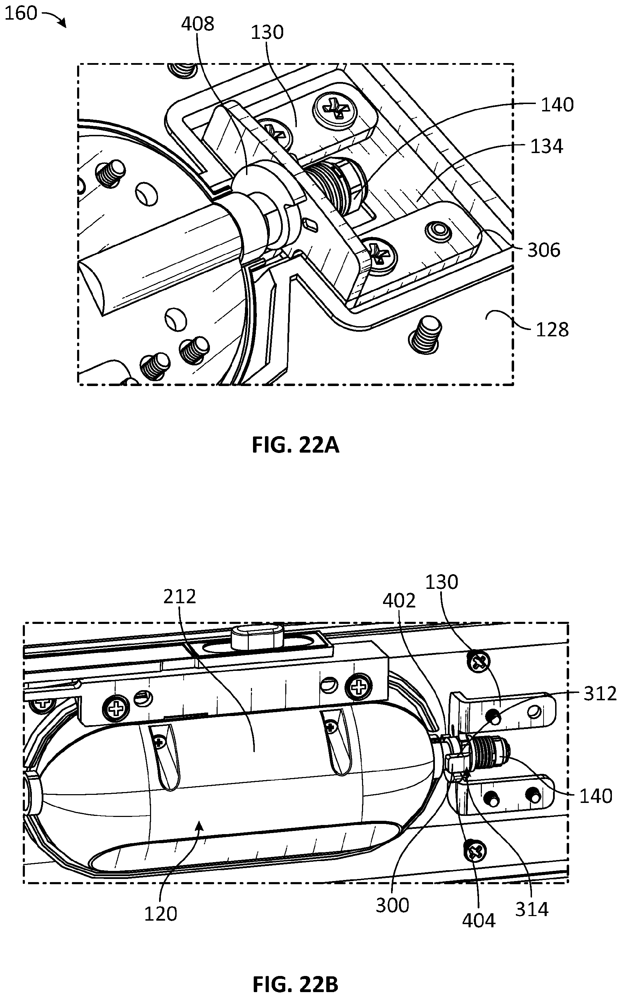

FIG. 17 illustrates a perspective view of camera 120 position at the third angle in a downward-facing direction associated with exposed orientation 201 in accordance with an embodiment of the disclosure. For instance, camera 120 may be rotated in a direction 105 (e.g., first direction), such as downward, until a bottom edge of a front face of camera 120 is flush with speaker grill 124 and camera 120 is positioned at the third angle. Camera 120 may be stopped from advancing further than (e.g., beyond) the third angle by a second engagement surface 404 biasing a second abutment surface 314 (shown in FIG. 22B), as discussed further herein below. In some embodiments, when camera 120 is positioned in the downward-facing angle, a focal axis of imaging device 206 may be tilted toward the plane of the surface of screen 108, thus creating an acute angle between the surface of screen 108 and the focal axis. In various embodiments, focal axis may create an acute angle relative to the normal axis of screen 108 when camera 120 is oriented in the downward-facing direction.

FIG. 18 illustrates camera 120 in a concealed orientation 203 in accordance with an embodiment of the disclosure. In one or more embodiments, elongated body 208 is configured to rotate, about a longitudinal axis 222 (e.g., a central axis that runs along a length of elongated body 208) of body 208, between exposed orientation 201 and concealed orientation 203. In some embodiments, camera 120 may be rotated upward in a direction 103 (e.g., second direction) into concealed orientation 203. When camera 120 is in concealed orientation 203, a rear portion 212 of elongated body 208 may be visible to the user, and imaging device 206 may be hidden from the user's view, disposed partially or completely within housing 110.

FIG. 19A illustrates a front view of display device 100 with front speaker panel 124 removed for illustration purposes in accordance with an embodiment of the disclosure. As previously mentioned, front speaker panel 124 may be configured to cover one or more front speakers of speakers 112. In various embodiments, speakers 112 may include full range speakers. In some embodiments, the front speakers may include high frequency drivers. The front speakers may be configured to manage vibration, water resistance, and sound directionality. For instance, the front speakers may include a compliant material. A compliant material may include one or more rubber gaskets, foam sheets, and so on. For instance, compliant material may include a foam sheet that may be attached to a portion of an enclosure of housing 110. The foam sheet may reduce vibration of front speaker panel 124, limit fluid ingress into the front speakers, seal the sound from the front speakers, or any combination thereof. In one or more embodiments, one or more rear speakers of speakers 112 may include a similar configuration as the front speakers. For example, each rear speaker may include one or more foam sheets to reduce vibration of the back shell 116, limit fluid ingress into the rear speaker, seal the sound from the rear speaker, or any combination thereof. In one or more embodiments, the rear speakers may include low frequency drivers. In some embodiments, the rear speakers may include one or more subwoofers that work in conjunction with the front speakers.

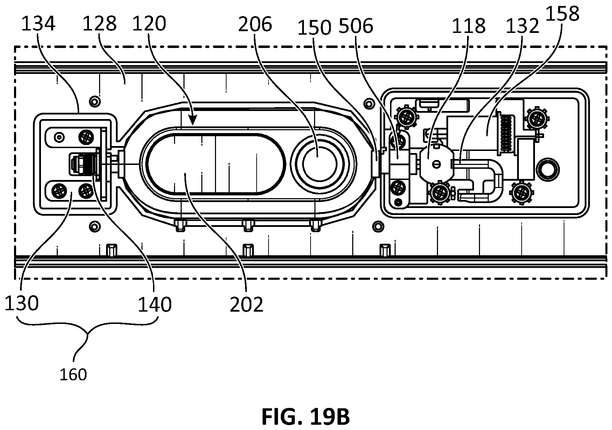

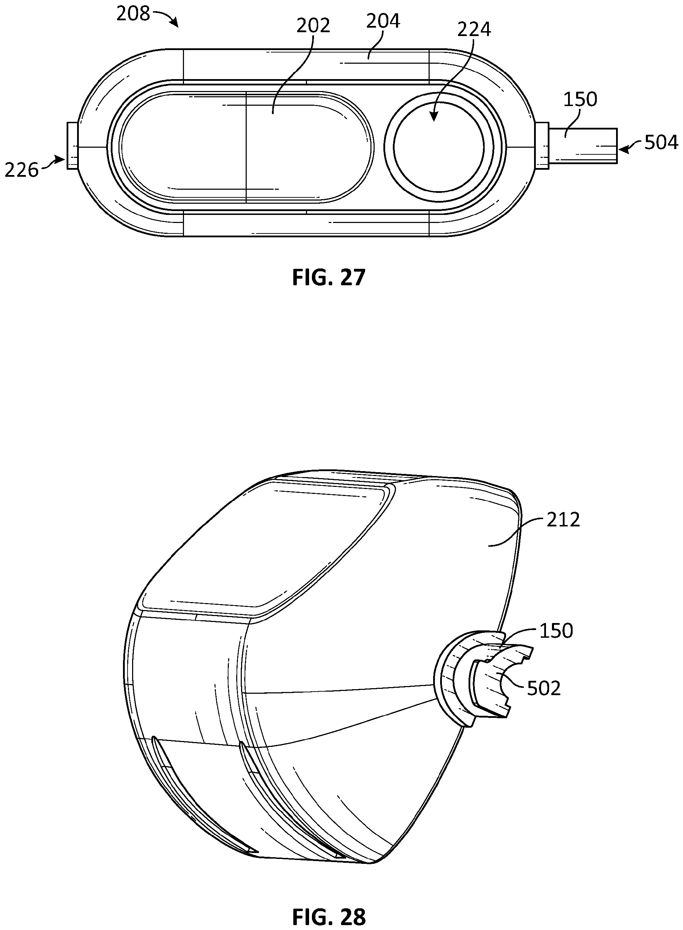

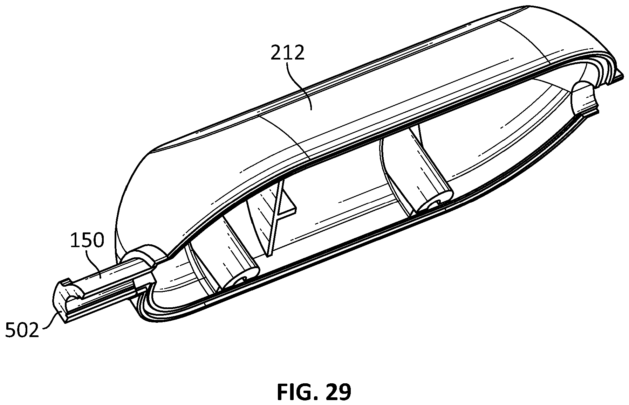

Now referring to FIG. 19B, a close-up front view of camera 120 in FIG. 19A is shown in accordance with an embodiment of the disclosure. In various embodiments, camera 120 may be at least partially disposed in a recess 134 of an enclosure 128. Recess 134 may have a shape complementary to camera 120 and/or one or more other components of display device 100. As shown in FIG. 19B, display device 100 may include a torque hinge 160 with controlled resistance and/or torque levels. Torque hinge 160 may include bracket 130, a pin 140, and a rod 150, as discussed in greater detail herein below. Display device 100 may include a printed circuit board (PCB) 158. PCB 158 may be configured to control indicator 118 and/or imaging device 206. For instance, PCB 158 may be configured to turn indicator 118 on when camera 120 (e.g., imaging device 206) is powered on, and PCB 158 may be configured to turn indicator 118 off when camera 120 (e.g., imaging device 206) is powered off. In one or more embodiments, upon rotation of camera 120 into concealed orientation 203, a protrusion 502 (shown in FIGS. 28-29) of rod 150 may contact a switch (e.g., a toggle switch) of display device 100 to control indicator 118 and/or imaging device 206. For example, the switch may include a spring switch that may be depressed downward, interrupting the circuit, turning off indicator 118, and disabling camera 120 simultaneously. In one or more embodiments, camera 120 may be primarily controlled by a logic device (e.g., logic device 3202 of FIG. 32), as discussed further in this disclosure. In some embodiments, camera 120 may be powered off by PCB 158 when protrusion 502 contacts the switch. In various embodiments, imaging device 206 may be powered off (e.g., termination of power supply to camera 120) or imaging device 206 may be sent into a suspended state (e.g., rest mode of operation) that includes a low power and no-function state when the switch is contacted by protrusion 502.

In various embodiments, microphone 114 may be controlled by PCB 158 and the switch. For instance, a single user manipulation may simultaneously physically obscure camera 120, electrically turn off imaging device 206, electrically turn off indicator 118, and/or electrically turn off microphone 114. Microphone 114 may also be controlled by microphone control 102. Microphone control 102 may include a switch, button, slider, and so on. In various embodiments, microphone 114, or any other component of display device 100, may be turned on or off using a voice command (e.g., voice activation and deactivation, respectively) by the user, providing the user with a hands-free option for controlling display 100.

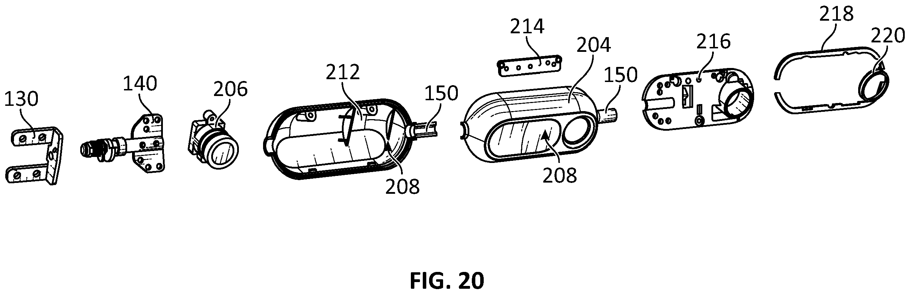

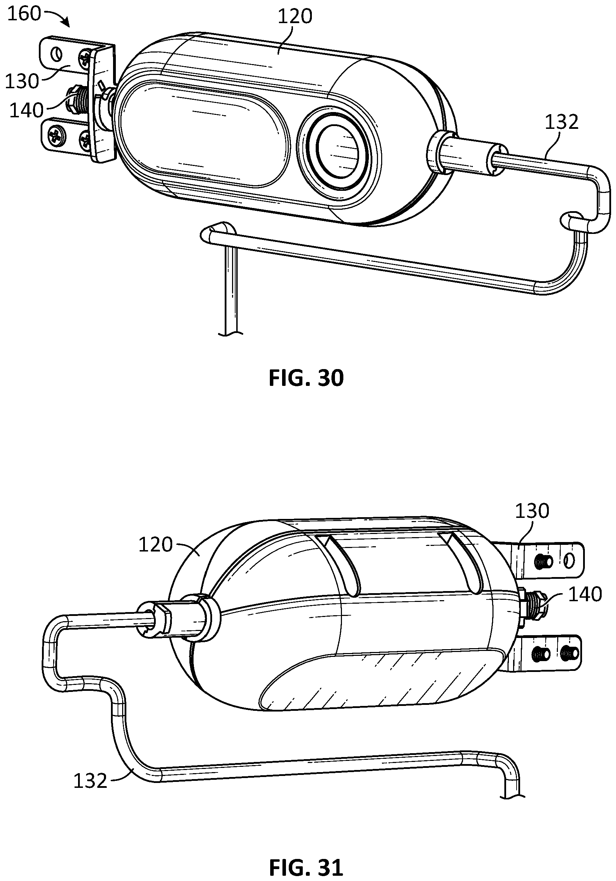

FIG. 20 illustrates an exploded view of display device 100 in accordance with an embodiment of the disclosure. As shown in FIG. 20, camera 120 includes imaging device 206, elongated body 208, support plate 216, secondary plate 214, first seal 218 (e.g., a seal for ingress), and second seal 220. First seal 218 and second seal 220 may be integrated or be separate parts. In one or more embodiments, display device 100 includes a rod 150. For instance, body 208 may include rod 150. In some embodiments, rod 150 may be integrated into body 208, as shown in FIG. 20. In other embodiments, rod 150 may be a separate component that may be attached or connected to body 208. Rod 150 may include a lumen 504 that one or more electrical components (e.g., cable 132 of FIGS. 30-31) may extend through to electrically and communicatively connect imaging device 206 to, for example, printed circuit board (PCB) 158, logic device 3202, or other components of display 100.

In one or more embodiments, display device 100 may include bracket 130 of torque hinge 160, which may include at least an abutment surface. In one or more embodiments, display device 100 may include pin 140 of torque hinge 160. Pin 140 may extend from camera 120 and include at least an engagement surface.

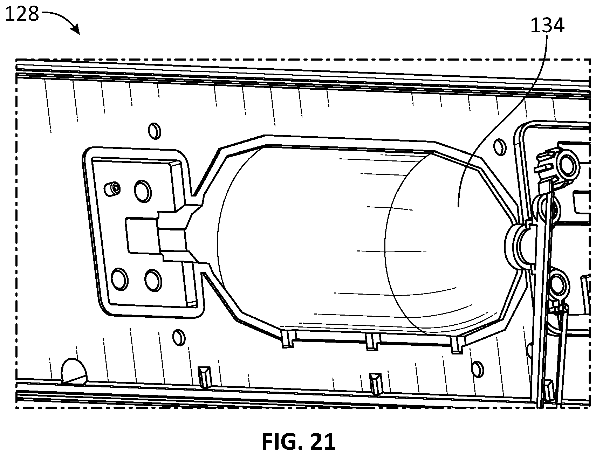

FIG. 21 illustrates a perspective view of enclosure 128 in accordance with an embodiment of the disclosure. As previously mentioned, enclosure 128 may include recess 134 configured to receive camera 120 and/or other components of display device 100, such as bracket 130, pin 140, and rod 150. Enclosure 128 may be composed of various materials, such as plastic, fiberglass, metal, and so on. When in concealed orientation 203, camera 120 may be obscured from capturing images of user by enclosure 128 (e.g., a surface of recess 134).

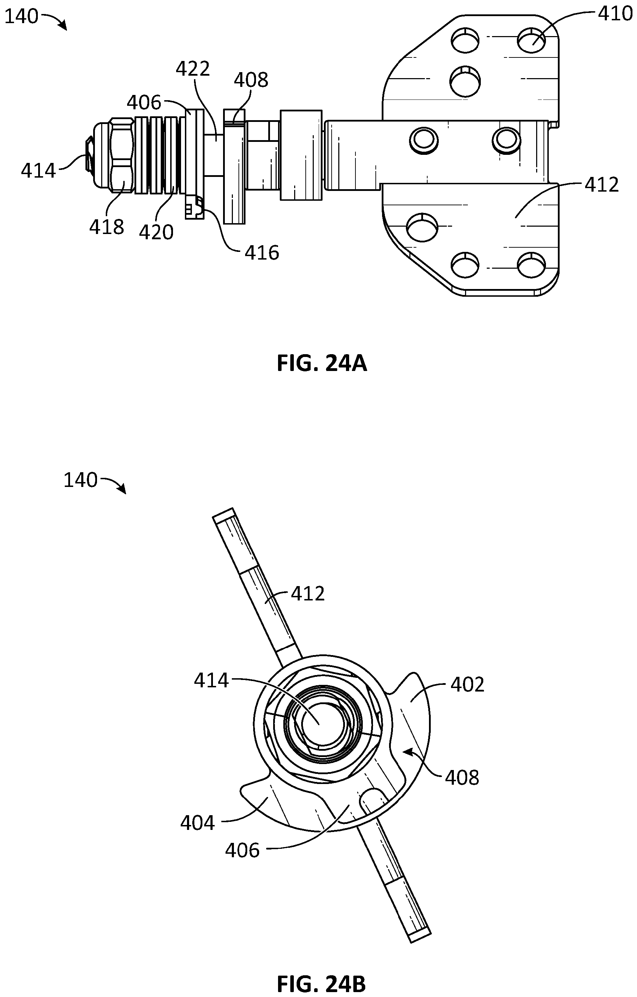

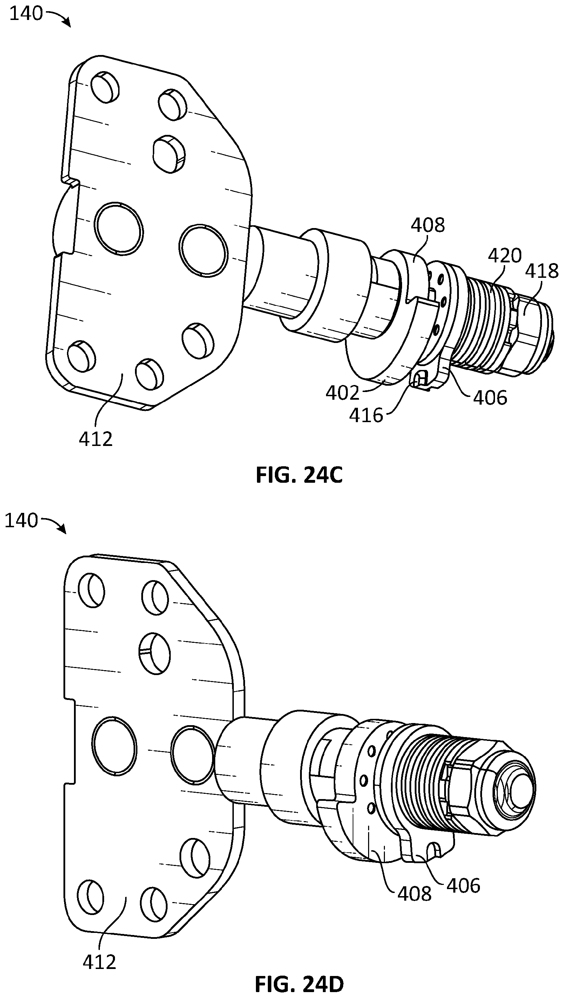

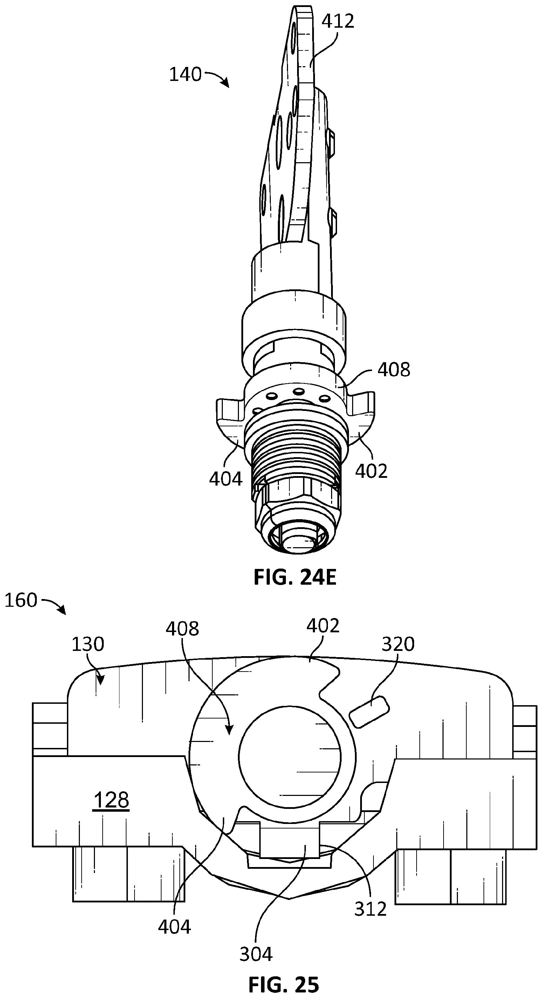

FIGS. 22A-22B illustrate various views of torque hinge 160, which includes at least pin 140 and bracket 130, of display device 100 in accordance with embodiments of the disclosure. Torque hinge 160 provides a controlled level of resistance/feel during rotation of camera 120. Torque hinge 160 is further configured to provide tactical and audible feedback (e.g., a "click") to the user, notifying the user when, for example, camera 120 is secured or locked in the concealed orientation. Pin 140 may be configured to rotate in conjunction with elongated body 208 while bracket 130 remains fixed relative to housing 110. In some embodiments, bracket 130 may be attached to housing 110 (e.g., enclosure 128) and pin 140 may be attached to camera 120 using fasteners (e.g., screws, nails, tongue and groove attachment, adhesive, and so on). In one or more embodiments, rotation assembly may provide a first resistance when moving between angles associated with exposed orientation 201, as described in FIGS. 16-17. However, a second resistance may occur when flange 408 is securing (e.g., locking) camera 120 into concealed orientation 203, as described in FIG. 18. For instance, catch 406 passing over knob 320 may provide a second resistance different from the first resistance and detectable by the user. Catch 406 (e.g., raised surface 416 of catch 406, shown in FIGS. 24A-24C) passing over knob 320 may provide an audible "click" so that the user may receive audible and tactile feedback to determine when camera 120 is secured in concealed orientation 203. In another example, the second resistance may be created by a change in friction caused by flange 408 (e.g., flange 408 may rub against a surface of the recess or bracket).

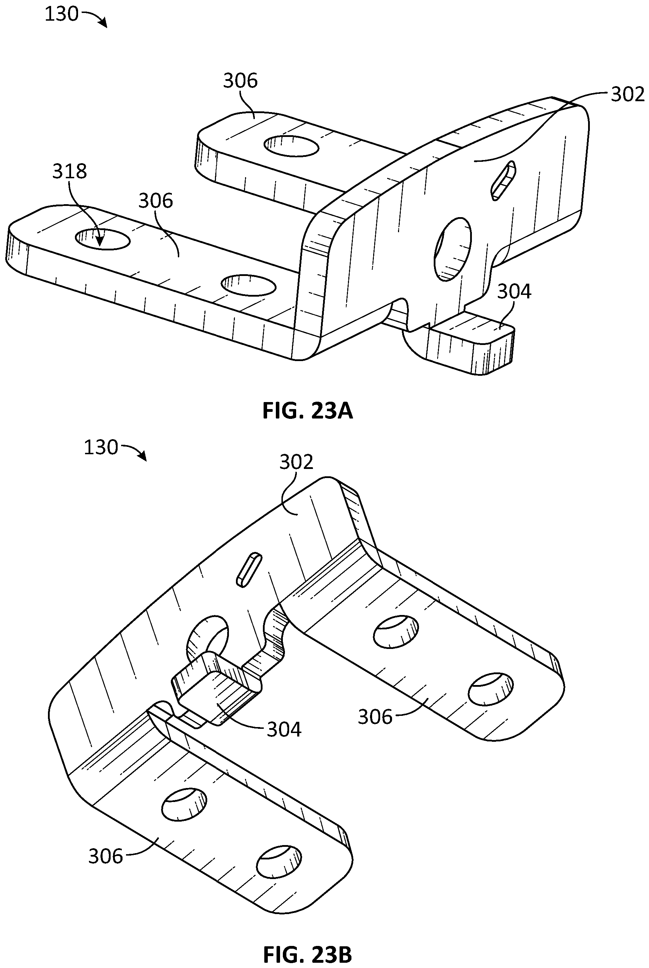

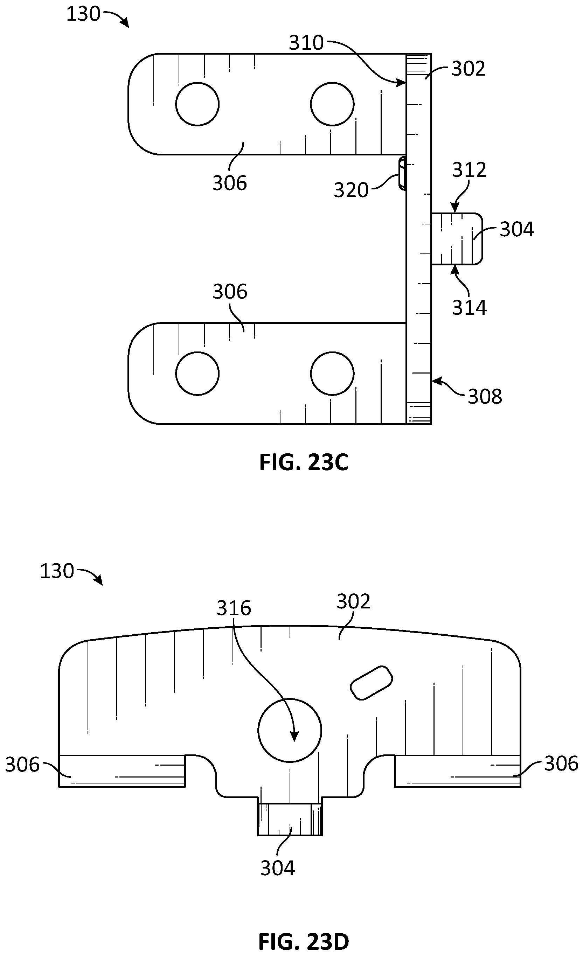

FIGS. 23A-23D illustrate several various views of bracket 130 of display device 100 in accordance with embodiments of the disclosure. In one or more embodiments, bracket 130 may include a base 302, one or more prongs 306 extending from base 302, and a tab 304 extending from base 302. In some embodiments, tab 304 may extend in a direction relatively opposite of prongs 306. In some embodiments, base 302 may include one or more holes. For instance, base 302 may include a hole 316, which is configured to receive at least a portion of pin 140. Pin 140 may be disposed through hole 316 so that components of pin 140 may interact with components of bracket 130 on either side of base 302. For instance, pin 140 may be rotated in direction 103; in response to the rotation, catch 406 of pin 140 may be configured to pass over knob 320 on second face 310 (shown in FIG. 23C), securing camera 120 in concealed orientation 203. Furthermore, after catch 406 passes over knob 320 when traveling in direction 103, a first engagement surface 402 of pin 140 may bias a first abutment surface 312 of tab 304, preventing pin 140 from rotating any farther in the direction 103. Pin 140 being disposed through hole 316 also prevents pin 140 from moving laterally (e.g., along longitudinal axis 222), where base 302 may be disposed at least partially between flange 408, which abuts first face 308, and catch 406, which abouts second face 310.

In one or more embodiments, bracket 130 may include a bifurcated bracket having two prongs 306. In some embodiments, prongs 306 may be substantially parallel to each other. In other embodiments, they may be angled relative to each other. In some embodiments, prongs 306 may extend from base 302 within the same plane so that a surface of each prong 306 may contact a surface (e.g., recess) of enclosure 128 when removably attached thereto. Each of prongs 306 may include one or more holes 318. Holes 318 may each receive a fastener (e.g., screw, nail, and so on), removably attaching bracket to housing 110 (e.g., enclosure 128), as shown in FIG. 22A. In other embodiments, holes 318 may be used for locating purposes. In some embodiments, bracket 130 having a pair of prongs 306 with a gap therebetween allows for a portion of pin 140 to extend through bracket 130 without undesirably contacting prongs 306 and allows a longitudinal axis of pin 140 to substantially align with longitudinal axis 222 of body 208.

FIGS. 24A-24E illustrate several various views of pin 140 of display device 100 in accordance with embodiments of the disclosure. Pin 140 may include one or more fins 412, flange 408, and catch 406. In some embodiments, pin 140 may include a threaded interface 414 of a shaft 422 that a nut 418 may engage with to secure one or more washers 420 of pin 140. In various embodiments, each of fins 412 may include one or more holes 410, which may each receive a fastener configured to secure pin 140 to camera 120 (e.g., support plate 216) and/or be used for locating purposes. In one or more embodiments, pin 140 may include shaft 422 having a longitudinal axis. In one or more embodiments, flange 408 may extend from and/or about shaft 422. In various embodiments, flange 408 may extend only partially about a circumference of shaft 422, thus defining one or more engagement surfaces. For instance, flange may only extend approximately half of the circumference of shaft 422. In some embodiments, flange 408 may include an integral component of pin 140. In other embodiments, flange 408 may include a separate component, where flange 408 may be assembled onto pin 140. Flange 408 may include one or more engagement surfaces 404 that act as mechanical stops regarding movement of camera 120, as previously discussed herein. For instance, flange 408 may include opposing engagements surfaces, such as first engagement surface 402 and second engagement surface 404.

In one or more embodiments, pin 140 may include catch 406, which is configured to secure camera 120 in concealed orientation 203, as previously discussed herein. Catch 406 may include raised surface 416, which may create a change in resistance as it passes over knob 320 and secure camera in the concealed orientation.

FIG. 25 illustrates a cross-sectional view of a bracket and pin of the display device in FIG. 19A, as seen along the lines of the section 19A-19A taken therein, in accordance with an embodiment of the disclosure. A hard stop may be provided by first engagement surface 402 of pin 140 biasing first abutment surface 312 of bracket 130, or second engagement surface 404 of pin 140 biasing second abutment surface 314 of bracket 130, preventing the user from over rotating camera 120, which protects electrical wiring of camera 120 (e.g., cable 132 of FIGS. 30-31) from being damaged and/or prevents the FOV of camera 120 from being occluded when oriented in the downward-facing direction. In one or more embodiments, the hard stop may be provided to prevent camera 120 from rotating past a specific angle when in the concealed orientation 203. For instance, when rotated in direction 103, camera 120 may be rotated until first engagement surface 402 of pin 140 biases first abutment surface 312 of bracket 130. In other embodiments, when rotated in direction 105, camera 120 may be rotated until second engagement surface 404 of pin 140 biases second abutment surface 314 of bracket 130.

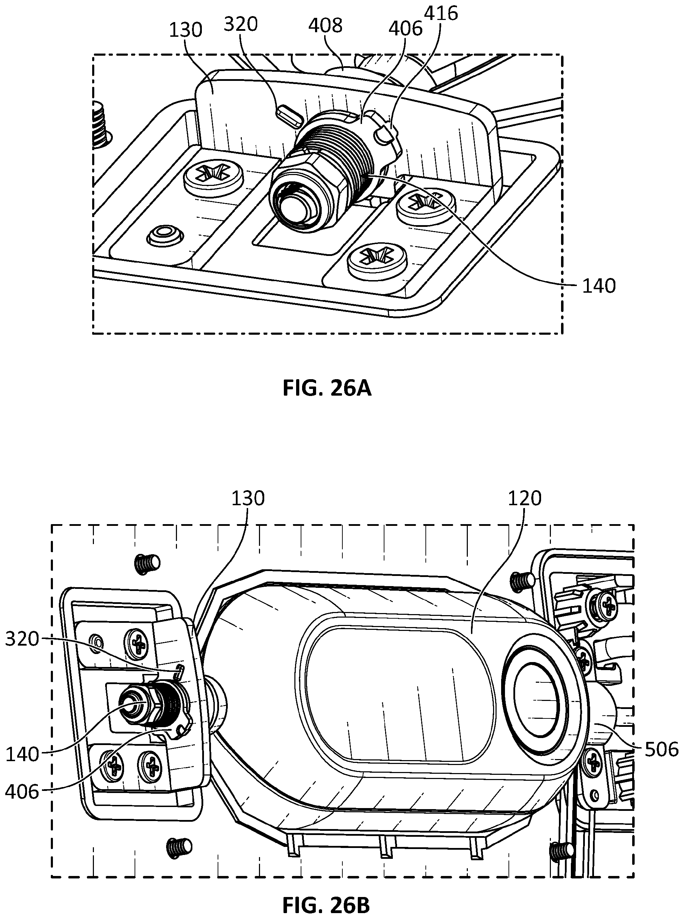

FIGS. 26A-26B illustrate various views of catch 406 and knob 320 of display device 100 in accordance with embodiments of the disclosure. Upon rotation in direction 103, catch 406 may rotate toward knob 320 until catch 406 passes over knob 320, securing camera 120 in the concealment orientation. The user may rotate camera in direction 105, opposite direction 103, to move catch 406 over knob 320 so that camera may be freely moved between various angles in the exposed orientation.

FIGS. 27-29 illustrate several various views of elongated body 208 of camera 120 in accordance with embodiments of the disclosure. Body 208 may include a front portion 204 and a rear portion 212 that may be combined together. When camera 120 is in the concealed orientation, rear portion 212 is facing the user. As shown in FIG. 27, in some embodiments, body 208 includes opening 226, which pin 140 may traverse through when attached to camera 120. Imaging device 206 may be at least partially disposed within body 208. Body 208 may define an aperture 224 that the lens of imaging device 206 may be partially disposed within and/or aligned with.

Rod 150 of elongated body 208 is shown extending from elongated body 208 opposite of pin 140 and opening 226. As previously mentioned, display device 100 include the switch. The switch may be configured to be actuated by rod 150. For instance, rod 150 may be configured to contact the switch when the camera is in the concealed orientation to turn off the camera. In one or more embodiments, catch 406 may be configured to secure camera 120 and rod 150 is configured to turn off camera 120 simultaneously with each other in response to the rotation. Moving camera 120 into the concealed orientation may trigger the switch (not shown) that disables camera (e.g., imaging device 206), wherein disabling camera 120 may include terminating power supplied to imaging device 206 or suspending camera 120 into a rest mode. Thus, camera may be physically obscured by being orientated toward face enclosure 128 and also electrically disabled to provide complete privacy of the user.

FIGS. 30-31 illustrate various views of a camera in accordance with embodiments of the disclosure. As previously mentioned, cable 132 may traverse through lumen 504 of rod 150. Cable 132 may include a plurality of insulated wires that provide wired communication between imaging device 206 and various components of display device 100 (e.g., PCB, logic device, and so on). Cable 132 may extend from a center of a rotating axis (e.g., longitudinal axis) of elongated body 208. Elongated body 208 may include front portion 204 and rear portion 212, as previously mentioned, so that elongated body may be clamped together with cable 132 disposed at least partially therein. Elongated body 208 may be configured to pivot about cable 132 when orientations and/or angles of camera 120 are altered. In various embodiments, display 100 may include a low-friction bracket 506 (shown in FIG. 26B) configured to secure rod 150 within display 100, such as to the enclosure. Low-friction bracket 506 maintains a correct axis of rotation (e.g., longitudinal axis 222) of camera 120 and facilitates a smooth movement of camera 120 (e.g., rotation).

FIG. 32 illustrates a block diagram of display device 100 in accordance with an embodiment of the disclosure. More specifically, block diagram shows an exercise system 3222 that includes exercise equipment 101 and display device 100, which is mounted to exercise equipment 101.

In some embodiments, display device 100 may include screen 108, which is communicatively connected to logic device 3202, and/or any other components of system 3222, and configured to show content and provide a user interface, as previously mentioned herein. Screen 108 may include an image display component or device (e.g., a liquid crystal display (LCD), head-up display, projection, LED, LED screen, cathode ray tube (CRT), touchscreen) or various other types of generally known video displays or monitors.

In one or more embodiments, display device 100 may include camera 120, which is configured to capture one or more images (e.g., frames) of a scene that is within a field of view (FOV) 3201 of camera 120. In several embodiments, user 3200 may be within the scene. In one or more embodiments, camera 120 may be used to capture images of scene, such as visible and/or non-visible light images. For instance, and without limitation, camera 120 may be used to capture and process visible light images. In one or more embodiments, camera 120 may include one or more visible light imaging devices, infrared imaging devices, ultraviolet imaging devices, any combination thereof, and the like. Camera 120 may be configured to capture one or more images or videos. In various embodiments, camera 120 may include analog-to-digital converters to digitize images captured by camera 120. Images captured by camera 120 (e.g., imaging device 206) may be stored in memory 3204. In one or more embodiments, suitable image processing may be performed by logic device 3202, which can be a software or firmware programmed computer processor or a hardwired processor.

In various embodiments, logic device 3202 may represent any number of logic devices working in concert or independently. In some embodiments, one or more of such logic devices, possibly all of them, can be provided externally, outside of camera 120, possibly remotely, and can communicate with camera 120 over a computer network, such as the Internet, using communication component 3206. Communication component 3206 may provide wired and/or wireless connection (e.g., connection 3203) to circuits, components, and/or devices inside and outside of system 3222. Communication components 3206 may include ports and cables, such as ports 122 and 148. Memory 3204 may then be plugged back into camera 120, and memory parameters can be read by logic device 3202.

In some embodiments, logic device 3202 and/or logic device 3214 may be implemented as any appropriate logic device, such as, for example, a computing device, a controller, single-core processor, multi-core processor, control circuit, processor, microprocessor, programmable logic device (PLD) configured to perform processing operations, processing device, application specific integrated circuit (ASIC), digital signal processing (DSP) device, field programmable gate array (FPGA), system on a chip (SOC), memory storage device, memory reader, and/or any other appropriate combinations of processing devices and/or memory to execute instructions to perform appropriate operations, such as, for example, software instructions implementing a control loop for controlling various operations of system 3222. Such software instructions may also implement methods for processing images, processing sensor signals, determining a type of exercise equipment, retrieving software compatible with the type of exercise equipment, and so on.

In one or more embodiments, display device 100 includes one or more PCBAs that may include circuitry and/or components configured to control operation of display device 100. For example, the one or more PCBAs may include one or more drivers, chipsets, or other logic devices configured to control operation of screen 108, one or more audio units 3208 (e.g., one or more microphones 114 and/or speakers 112), or other components or systems of the display 100 (e.g., a video system). In some embodiments, the one or more PCBAs may include one or more cards dedicated to a particular system of display device 100. For instance, the one or more PCBAs may include one or more graphics cards, one or more sound cards, one or more CPU cards, and the like. PCBAs may include PCB 158 or logic devices of display device 100 or exercise equipment 101.

Logic devices 3202 and 3214 may include, be included in, and/or communicate with any component of the exercise equipment system. In some embodiments, each of logic devices 3202 and 3214 may include a single logic device operating independently. In other embodiments, each of logic devices 3202 and 3214 may include two or more logic devices operating in parallel, in concert, or sequentially. In various embodiments, each of logic devices 3202 and 3214 may include a plurality of logic devices in a single integrated unit. In other embodiments, each of logic devices 3202 and 3214 may include a plurality of logic devices part of two or more computing devices or systems. For instance, each of logic devices 3202 and 3214 may include a singular logic device or a cluster of logic devices in a first location, and a second logic device or cluster of logic devices in a second location. In various embodiments, each of logic devices 3202 and 3214 may be implemented as a memory, wherein logic device may include one or more logic devices dedicated to data storage. In various embodiments, each of logic devices 3202 and 3214 may distribute tasks and/or processes, as described herein, across a plurality of logic devices, where the plurality of logic devices may operate in series, in parallel, redundantly, and/or in any other manner appropriate for system 3222. In one or more embodiments, logic devices 3202, 3214 may be configured to perform any process, step, and/or sequence of steps described herein in any order and with any degree of repetition.

Each of logic devices 3202 and 3214 may be communicatively connected to any components described in this disclosure and configured to interface and/or communicate with the various components of system 3222. In various embodiments, it should be appreciated that processing operations and/or instructions may be integrated in software and/or hardware as part of logic devices 3202 and 3214, or code (e.g., software or configuration data) which may be stored in a memory device, such as memories 3204 and 3216, respectively. Embodiments of processing operations and/or instructions disclosed in this disclosure may be stored by a machine-readable medium in a non-transitory manner (e.g., a memory, a hard drive, a compact disk, a digital video disk, or a flash memory) to be executed by a computing device (e.g., logic or processor-based system) to perform various operations. In one or more embodiments, each of logic devices 3202 and 3214 may include a processor configured to execute instructions stored in a first memory and/or a programmable logic device (PLD) operable in accordance with a configuration of programmable logic blocks stored in a second memory.

In some embodiments, display device 100 includes memory 3204, which may store software instructions and/or databases used by logic device 3202. For instance, memory 3204 may include a machine-readable medium that may be provided for storing non-transitory instructions for loading into and execution by logic device 3202. In various embodiments, memory 3204 may be included as part of logic device 3202 and/or separate from logic device 3202, with stored instructions provided to logic device 3202 by communicatively connecting memory 3204 to logic device 3202. In various embodiments, as described herein, instructions provide for real time applications of processing various images of user 3200. Exercise equipment 101 may include memory 3216, which may be implemented similarly to memory 3204 of display device 100.

In some embodiments, each of memories 3204 and 3216 may include one or more memory devices (e.g., one or more memories) to store data and information. The one or more memory devices may include various types of memory including volatile and non-volatile memory devices, such as RAM (Random Access Memory), ROM (Read-Only Memory), flash memory, EEPROM (Electrically-Erasable Read-Only Memory), or other types of memory. In some embodiments, each of memories 3204 and 3216 may include RAM (e.g., static and/or dynamic) memory and/or flash memory, clock-related circuitry (e.g., clock sources, phase-locked loop (PLL) circuits, and/or delay-locked loop (DLL) circuits), and/or various routing resources (e.g., interconnect and appropriate switching logic to provide paths for routing signals throughout logic device 3202, such as for clock signals, data signals, or others) as appropriate.

As previously mentioned, logic device 3202 may be configured to execute software stored in memory 3204 to perform various methods, processes, and/or operations in a manner as described herein. In various embodiments, memory 3204 may be implemented as a volatile memory, non-volatile memory, one or more interfaces, and/or various analog and/or digital components for interfacing with devices and/or components of system 3222. For example, memory 3204 may be adapted to store images (e.g., image data or sensor information), parameters for image transformations, operation parameters, calibration parameters, and/or other operational parameters. In some embodiments, memory 3204 may be adapted to execute one or more feedback loops for operation of system 3222. In some embodiments, a feedback loop may include processing images, sensor signals, and/or parameters in order to control one or more operations of system 3222 (e.g., resistance). Memory 3216 of exercise equipment 101 may be implemented in similarly to memory 3204.

In some embodiments, display device 100 includes a communication component 3206 and exercise equipment 101 may include communication component 3218, where each may be implemented as a connector (e.g., to interface one or more electronic components to an external device), a network interface component (NIC) configured for communication with a network including other devices in the network, and/or other implementations. For instance, communication components may include cable 152, cable 132, accessory port 122, power port 148, wireless communication, Bluetooth, and so on. In various embodiments, each of communication components 3206 and 3218 may include one or more wired or wireless communication components, such as an Ethernet connection, a wireless local area network (WLAN) component based on the IEEE 802.11 standards, a wireless broadband component, mobile cellular component, a wireless satellite component, or various other types of wireless communication components including radio frequency (RF), microwave frequency (MWF), and/or infrared frequency (IRF) components configured for communication with a network, a LAN card, a modem, and any combination thereof. As such, each of communication components 3206 and 3218 may include an antenna coupled thereto for wireless communication purposes. In other embodiments, each of communication components 3206 and 3218 may be configured to interface with a DSL (e.g., Digital Subscriber Line) modem, a PSTN (Public Switched Telephone Network) modem, an Ethernet device, and/or various other types of wired and/or wireless network communication devices configured for communication with a network.

Each of communication components 3206 and 3218 may be implemented as any wired and/or wireless communications module and/or device configured to transmit and receive analog and/or digital signals between components of system 3222 and/or remote devices and/or systems. For example, each of communication components 3206 and 3218 may be configured to receive control signals and/or data and provide them to logic devices and/or memories. In other embodiments, each of communication components 3206 and 3218 may be configured to receive images and/or other sensor information from camera 120, logic device 3202, and the like and relay the corresponding data within system 3222 and/or to external systems. Wireless communication links may include one or more analog and/or digital radio communication links, such as Wi-Fi and others, as described herein, and may be direct communication links, for example, or may be relayed through one or more wireless relay stations configured to receive and retransmit wireless communications. Communication links established by each of communication components 3206 and 3218 may be configured to transmit data between components of system 3222 substantially continuously throughout operation of system 3222, where such data includes various types of image data (e.g., images), sensor data, control parameters, and/or other data, as described herein.

In one or more embodiments, logic device 3202 may interface or communicate with one or more additional devices and/or systems using communication component 3206. Communication component 3206 may be configured to communicative connect logic device 3202 to one or more networks and/or one or more devices. Examples of a network interface device include, but are not limited to, a network interface card (e.g., a network may employ a wired and/or a wireless mode of communication). In general, any network topology may be used. Information (e.g., data, software, and the like) may be communicated to and/or from a computer and/or a computing device. Examples of a network may include, but are not limited to, a local area network (LAN), wide area network (WAN), telephone network, data network, a direct connection between two computing devices (e.g., logic devices 3202 and/or 3214 and another device and/or system), or any combinations thereof.

In some embodiments, a network may be implemented as a single network or a combination of multiple networks. For example, in various embodiments, the network may include the internet and/or one or more intranets, landline networks, wireless networks, and/or other appropriate types of communication networks. In another example, the network may include a wireless telecommunications network (e.g., cellular phone network) configured to communicate with other communication networks, such as the internet. As such, in various embodiments, display device 100 and/or its individual associated components may be associated with a particular network link such as for example a URL (Uniform Resource Locator), an IP (Internet Protocol) address, and/or a mobile phone number.

In some embodiments, system 3222 may include other components 3210 and 3212. For instance, in some non-limiting exemplary embodiments, each of other components 3201 and 3212 may include one or more sensors, as previously discusses herein. In some embodiments, the one or more sensors may include an array of sensors (e.g., pressure sensors, gyroscopes, accelerometers, imaging devices, and so on). In various embodiments, sensors may provide for representing (e.g., converting) captured images of the scene within the FOV as digital data (e.g., via an analog-to-digital converter included as part of the sensor or separate from the sensor as part of system 3222).

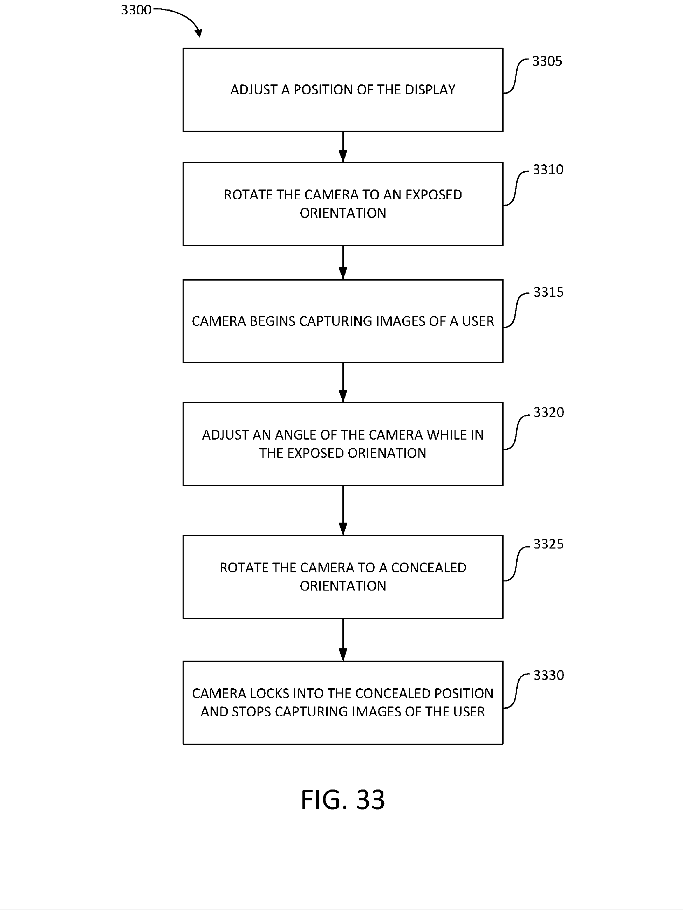

FIG. 33 illustrates a flow chart of a process 3300 of operating display device 100 in accordance with an embodiment of the disclosure. Any step, sub-step, sub-process, or block of process 3300 may be performed in an order or arrangement different from the embodiments illustrated in FIG. 33, some may be omitted, others may be added, and some may be performed simultaneously as appropriate. Although process 3300 is described with reference to the embodiments of FIGS. 1-32, process 3300 may be applied to other embodiments.

In block 3305, process 3300 includes adjusting a position of display device 100. In one or more embodiments, adjusting the position of display device 100 may include titling or pivoting display relative to exercise equipment 101. The process of adjusting the position of display 100 may be consistent with display adjustment described in FIGS. 1-32, such as in FIGS. 15A-15E.

In block 3310, process 3300 includes rotating, by the user 3200, camera 120 of display device 100 in direction 105 relative to housing 110 of display device 100 to position camera 120 in exposed orientation 201 to capture images of user 3200. The process of rotating camera 120 may be consistent with camera rotation described in FIGS. 1-32, such as FIGS. 16-18.

In block 3315, process 330 includes camera 120 begin capturing images of user 3200. In one or more embodiments, an imaging device 206 of camera 120 may capture a scene having the user 3200 within a field of view 3201 of camera. In one or more embodiments, process 3300 may include viewing, by user 3200, information on screen 108 of display device 100 while camera 120 captures images. The process of capturing images with camera 120 may be consistent with the image capturing described in FIGS. 1-32.

In one or more embodiments, display device 100 may include accessory port 122. Process 3300 may include receiving, by accessory port 122, power at display device 100 from exercise equipment 101, and performing, by accessory port 122, bidirectional communication between display device 100 and exercise equipment 101. Performing bidirectional communication may include exchanging information between exercise equipment 101 and display device 100. In one or more embodiments, the information may include the images captured by camera 120, content associated with an exercise class performed by user 3200, and/or the like.

In block 3320, process 3300 includes adjusting an angle of camera 120 while in exposed orientation 201. As previously mentioned, camera 120 may be configured to rotate through a plurality of angles associated with exposed orientation 201, the angles may include a first angle associated with an upward-facing direction of the camera, a second angle associated with a forward-facing direction of the camera, and/or a third angle associated with a downward-facing direction of the camera. The process of adjusting the angle of camera 120 may be consistent with angle adjustment described in FIGS. 1-32, such as FIGS. 16-18.

In block 3325, process 3300 includes rotating, by user 3200, camera 120 in direction 103 relative to housing 110 to position camera 120 in concealed orientation 203 to obscure camera 120 from capturing images of user 3200. In one or more embodiments, camera 120 includes an elongated body 208 configured to rotate, about a longitudinal axis 222 thereof, between exposed orientation 201 and concealed orientation 203. In one or more embodiments, imaging device 206 is disposed in elongate body 208 and configured to capture images (e.g., images of user 3200). In one or more embodiments, imaging device 206 is visible to user 3200 in exposed orientation 201 and is obscured from user 3200 in concealed orientation 203. The process of rotating camera 120 may be consistent with the camera rotation described in FIGS. 1-32.

In one or more embodiments, display device 100 includes pin 140 extending from camera 120 and including engagement surface, and bracket 130 including abutment surface. In one or more embodiments, in response to the rotating in direction 103, engagement surface may bias abutment surface to stop the rotating of camera 120 in the direction 103.

In one or more embodiments, pin 140 further includes catch 406, and bracket 130 includes knob 320. In one or more embodiments, in response to the rotating in direction 103, catch 406 may pass over knob 320 and bias knob 320 to secure camera 120 in the concealed orientation 203.

In one or more embodiments, display device 100 may include rod 150 extending from camera 120 opposite pin 140. Display device 100 may include a switch (not shown). In one or more embodiments, rod 150 may contact the switch when camera 120 is in concealed orientation 203 to turn off camera 120 (e.g., place camera in a low-power, no-function setting or terminate power to camera 120). In other embodiments, rod 150 may contact the switch when camera 120 is in concealed orientation to turn off indicator 118. In various embodiments, catch 406 may secure camera 120 and rod 150 may turn off camera 120 simultaneously with each other in response to the rotating in direction 103 of camera 120.

In block 3330, process 3300 includes locking camera 120 into concealed orientation 203 and stopping capturing images of user 3200. In some embodiments, following block 3330, process 3300 may loop back to one or more of the previous blocks to perform all or portions of process 3300 in an iterative repeating manner. The process of locking camera 120 into the concealed orientation may be consistent with the locking and/or securing described in FIGS. 1-32, such as FIGS. 26A-26B.

In one or more embodiments, process 3300 includes removably attaching housing 110 of display 100 to exercise equipment 101 by a mounting component, such as mounting component 144 or aperture 126. Mounting display 100 to exercise equipment 101 may be consistent with mounting described in FIGS. 1-32, such as FIGS. 15A-15E.

Where applicable, various embodiments provided by the present disclosure can be implemented using hardware, software, or combinations of hardware and software. Also, where applicable, the various hardware components and/or software components set forth herein can be combined into composite components comprising software, hardware, and/or both without departing from the spirit of the present disclosure. Where applicable, the various hardware components and/or software components set forth herein can be separated into sub-components comprising software, hardware, or both without departing from the spirit of the present disclosure. In addition, where applicable, it is contemplated that software components can be implemented as hardware components, and vice versa.

Software in accordance with the present disclosure, such as non-transitory instructions, program code, and/or data, can be stored on one or more non-transitory machine-readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

All relative and directional references (including up, down, upper, lower, top, bottom, side, front, rear, and so forth) are given by way of example to aid the reader's understanding of the examples described herein. They should not be read to be requirements or limitations, particularly as to the position, orientation, or use unless specifically set forth in the claims. Connection references (e.g., attached, coupled, connected, joined, and the like) are to be construed broadly and may include intermediate members between a connection of elements and relative movement between elements. As such, connection references do not necessarily infer that two elements are directly connected and in fixed relation to each other, unless specifically set forth in the claims.

The foregoing description is not intended to limit the present disclosure to the precise forms or particular fields of use disclosed. Embodiments described above illustrate but do not limit the invention. It is contemplated that various alternate embodiments and/or modifications to the present invention, whether explicitly described or implied herein, are possible in light of the disclosure. Accordingly, the scope of the invention is defined only by the following claims.

## Claims

1. A display device comprising:
a housing;
a screen configured to display information to a user; and
a camera mounted in the housing and configured to rotate relative to the housing, in response to a manipulation by the user, between:
an exposed orientation wherein the camera is configured to capture images of the user, and
a concealed orientation wherein the camera is obscured from capturing images of the user.

2. The display device of claim 1, wherein the camera is configured to rotate through a plurality of angles associated with the exposed orientation, the angles comprising:
a first angle associated with an upward-facing direction of the camera;
a second angle associated with a forward-facing direction of the camera; and
a third angle associated with a downward-facing direction of the camera.

3. The display device of claim 1, wherein the camera comprises:
an elongated body configured to rotate, about a longitudinal axis thereof, between the exposed orientation and the concealed orientation;
an imaging device disposed in the elongate body and configured to capture the images; and
wherein the imaging device is visible to the user in the exposed orientation and is obscured from the user in the concealed orientation.

4. The display device of claim 1, further comprising a torque hinge, the torque hinge comprising:
a pin extending from the camera and comprising an engagement surface; and
a bracket comprising an abutment surface;
wherein the user manipulation comprises a rotation of the camera from the exposed orientation to the concealed orientation; and
wherein, in response to the rotation, the engagement surface is configured to bias the abutment surface to stop the rotation of the camera.

5. The display device of claim 4, wherein:
the pin further comprises a catch;
the bracket further comprises a knob; and
wherein, in response to the rotation, the catch is configured to pass over the knob and bias the knob to secure the camera in the concealed orientation.

6. The display device of claim 5, further comprising:
a rod extending from the camera opposite the pin;
a switch;
wherein the rod is configured to contact the switch when the camera is in the concealed orientation to turn off the camera, and optionally wherein the catch is configured to secure the camera and the rod is configured to turn off the camera simultaneously with each other in response to the rotation.

7. The display device of claim 1, further comprising a mounting component configured to removably attach the housing to exercise equipment.

8. The display device of claim 1, further comprising a port configured to receive power from exercise equipment and to perform bidirectional communication between the display and the exercise equipment.

9. A system comprising:
exercise equipment; and
the display device of claim 1 mounted to the exercise equipment.

10. A method comprising:
rotating, by a user, a camera of a display device in a first direction relative to a housing of the display device to position the camera in an exposed orientation to capture images of the user;
viewing, by the user, information on a screen of the display device while the camera captures the images; and
rotating, by the user, the camera in a second direction relative to the housing to position the camera in a concealed orientation to obscure the camera from capturing images of the user.

11. The method of claim 10, wherein the camera is configured to rotate through a plurality of angles associated with the exposed orientation, the angles comprising:
a first angle associated with an upward-facing direction of the camera;
a second angle associated with a forward-facing direction of the camera; and
a third angle associated with a downward-facing direction of the camera.

12. The method of claim 10, wherein the camera comprises:
an elongated body configured to rotate, about a longitudinal axis thereof, between the exposed orientation and the concealed orientation;
an imaging device disposed in the elongate body and configured to capture the images; and
wherein the imaging device is visible to the user in the exposed orientation and is obscured from the user in the concealed orientation.

13. The method of claim 10, wherein the display device further comprises a torque hinge, the torque hinge comprising:
a pin extending from the camera and comprising an engagement surface;
a bracket comprising an abutment surface; and
wherein, in response to the rotating in the second direction, the engagement surface biases the abutment surface to stop the rotating in the second direction; and
optionally wherein:
the pin further comprises a catch;
the bracket further comprises a knob; and
wherein, in response to the rotating in the second direction, the catch passes over the knob and biases the knob to secure the camera in the concealed orientation; and
optionally wherein the display device further comprises:
a rod extending from the camera opposite the pin;
a switch; and
wherein the rod contacts the switch when the camera is in the concealed orientation to turn off the camera, and optionally wherein the catch secures the camera and the rod turns off the camera simultaneously with each other in response to the rotating in the second direction.

14. The method of claim 10, further comprising removably attaching the housing to exercise equipment by a mounting component; or
wherein the display device further comprises a port, and the method further comprising:
receiving, by the port, power at the display device from exercise equipment; and
performing, by the port, bidirectional communication between the display and the exercise equipment.

15. The method of claim 10, wherein the information comprises one or more of:
the images captured by the camera; and/or
content associated with an exercise class performed by the user.
